# EUROPEAN PATENT SPECIFICATION

(11) **EP 4 546 885 B1**
(45) Date of publication and mention of the grant of the patent: **09.09.2026**
(21) Application number: 23845466.4
(22) Date of filing: 21.07.2023
(51) Int. Cl.: H04W 52/02, H04W 4/80, H04W 76/10, H04W 4/06, H04W 12/06, H04W 8/00, H04W 48/10, H04W 48/16, H04W 88/02, H04W 84/18, H04W 48/08, H04W 76/14

(54) **METHOD FOR MANAGING CONNECTION BETWEEN DEVICES, AND DEVICE AND SYSTEM**
VERFAHREN ZUR VERWALTUNG DER VERBINDUNG ZWISCHEN VORRICHTUNGEN SOWIE VORRICHTUNG UND SYSTEM
PROCÉDÉ DE GESTION DE CONNEXION ENTRE DES DISPOSITIFS, ET DISPOSITIF ET SYSTÈME

(30) Priority: 27.07.2022 CN 202210894268
(43) Date of publication of application: 30.04.2025
(73) Proprietor: Huawei Technologies Co., Ltd., Shenzhen, Guangdong 518129 (CN)
(72) Inventor: ZHOU, Rong, Shenzhen, Guangdong 518129 (CN); QIU, Zeling, Shenzhen, Guangdong 518129 (CN)
(74) Representative: Goddar, Heinz J.
(86) International application number: PCT/CN2023/108693
(87) International publication number: WO 2024/022256

(56) References cited:
- WO-A1-2022/057559
- CN-A- 1 510 846
- CN-A- 108 769 973
- CN-A- 109 769 240
- CN-A- 113 794 529
- CN-A- 114 257 996
- CN-B- 111 263 339
- US-A1- 2020 380 566

## Description

### TECHNICAL FIELD

Embodiments of this application relate to the field of terminal communication technologies, and in particular, to an inter-device connection management method, a device, and a system.

### BACKGROUND

With development of diversified mobile communication technologies and terminal functions, interaction, collaboration, and the like between devices are increasingly frequent and close. The interaction, collaboration, and the like between devices depend on a communication connection between the devices. For example, the communication connection between the devices may be a Bluetooth connection, a wireless local area network (wireless fidelity, Wi-Fi) connection, or the like.

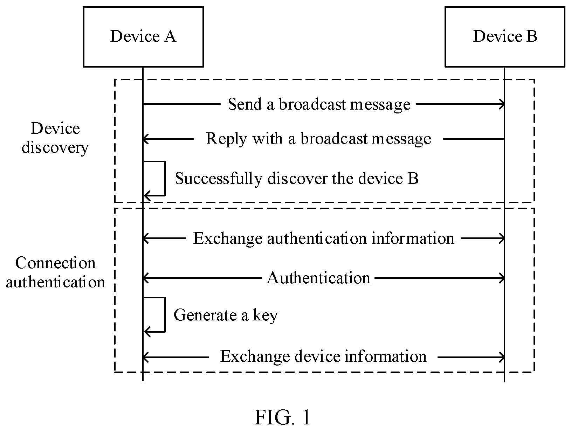

Usually, as shown in FIG. 1, a process of establishing a communication connection between devices mainly includes: A device A sends a broadcast message to query a peripheral device. If a device B obtains the broadcast message through scanning, the device B replies to the device A with a broadcast message, to notify the device A of existence of the device B. After receiving the reply from the device B, the device A determines that the device B is online (in other words, the device A successfully discovers the device B). Then, the device A and the device B perform connection authentication. As shown in FIG. 1, the device A and the device B complete connection authentication by exchanging respective authentication information, performing related authentication, generating a key, exchanging device information (for example, device IDs), and the like. In this way, the communication connection is established between the device A and the device B, and subsequent communication may be performed through the communication connection.

However, the foregoing inquiry-based device discovery process needs to take round trip time (round trip time, RTT), resulting in a large device discovery delay and high power consumption. In addition, in a scenario in which there is a multi-device discovery and connection networking requirement, for example, in a networking scenario, as a quantity of devices increases, a quantity of broadcast messages and a quantity of reply messages also increase. A large quantity of broadcast messages and reply messages cause a broadcast storm problem and severe interference. In addition, a discovery delay increases with increase of a quantity of devices, and a success rate decreases. In addition, frequent online and offline of a device also causes a problem of slow networking caused by re-establishment of a trust relationship and a problem of a networking failure caused by single-end offline due to delayed interaction. Consequently, keep alive performance is poor, and the scenario in which there is the multi-device discovery and connection networking requirement cannot be met.

WO 2022/057559 A1 describes a device discovery method applied to a sensing device within a first user equipment (UAE). The first UAE also includes a processor and a short-range communication (SMR) device. The method includes: receiving SMR parameters, including scanning parameters, from the processor before it goes into sleep mode; instructing the SMR device to scan according to the scanning parameters during processor sleep mode; acquiring a first message received through the scan, the first message being broadcast by a second UAE and including at least a second UAE identifier; and storing the second UAE identifier so that the processor can discover the second UAE based on the second UAE identifier after being woken up.

CN 111263339 B describes a method for a wireless communication device, wherein the wireless communication device includes a processor, a sensor hub with Bluetooth communication processing function, and a Bluetooth communication module, and the method includes: the processor sends a Bluetooth communication command to the sensor hub; the sensor hub, in response to the Bluetooth communication command, sends a driving command for a Bluetooth communication service corresponding to the Bluetooth communication command to the Bluetooth communication module; the Bluetooth communication module, in response to the driving command, executes the Bluetooth communication service and sends execution result information of the Bluetooth communication service to the sensor hub; the processor obtains the execution result information of the Bluetooth communication service from the sensor hub and uses the execution result information to complete the Bluetooth function of the application of the wireless communication device. The Bluetooth communication service includes at least one of Bluetooth broadcast, Bluetooth scanning, and Bluetooth data synchronization, and the Bluetooth function of the application of the wireless communication device includes at least one of Bluetooth connectivity and Bluetooth data synchronization.

### SUMMARY

This application provides an inter-device connection management method, a device, and a system, to reduce a delay and power consumption during device discovery.

The invention is defined by the independent claims. Advantageous embodiments of the invention are given by the dependent claims.

To achieve the foregoing objectives, the following technical solutions are used in embodiments of this application.

According to a first aspect, an inter-device connection management method is provided. The method includes: An application (application, AP) processor of a first device sends a proxy indication to a sensor hub (SensorHub, SH) chip of the first device, where the proxy indication carries an online device list, a broadcast strategy, and a scanning strategy, and the proxy indication indicates the SH chip to serve as a proxy of the AP processor to perform device discovery and keepalive; the SH chip sends a broadcast message according to the broadcast strategy, and performs scanning according to the scanning strategy; when the SH chip discovers a second device through scanning, the SH chip determines whether the second device is in the online device list; and if the second device is not in the online device list, the SH chip reports, to the AP processor, that the second device needs to go online.

According to the solution provided in the first aspect, the first device starts a broadcast from the low-power-consumption SH chip through the AP processor, performs scanning, and configures the online device list, the broadcast strategy, the scanning strategy, and the like. Then, regardless of a working state (including a wakeup state or a sleep state) of the AP processor and a screen status (including a screen-on state or a screen-off state) of the device, the SH chip may always serve as the proxy of the AP processor to perform device discovery and keepalive work until a new device is scanned. In a process in which the SH chip serves as the proxy of the AP processor to perform the device discovery and keepalive work, the SH chip may interact with another device by using the broadcast message. When the SH chip obtains a broadcast message from a device through scanning, if the device is not in the online device list, the SH chip may wake up the AP processor to perform device connection authentication. Because the SH chip is a low-power-consumption chip, in this method, a keepalive strategy with low power consumption and high performance is provided. This can reduce power consumption of the device, and resolve a problem of slow networking caused by re-establishing a trust relationship due to frequent online and offline and a problem of a networking failure caused by single-end offline due to delayed interaction.

In addition, an early connection can be implemented through early discovery in the background, so that the user can perform direct transmission during use (for example, perform transmission immediately after a service enters a foreground interface).

In addition, if another application wakes up the AP processor to perform another discovery and connection service, the SH chip may perform conflict avoidance on a task of the AP processor by monitoring a status of a protocol stack. For example, it is assumed that the AP processor is performing a BR Bluetooth audio connection task. The SH chip actively performs temporary delay avoidance after monitoring a status of a Bluetooth protocol stack.

In a possible implementation, the method further includes: The AP processor updates the online device list based on the report of the SH chip, where an updated online device list includes information about the second device; the AP processor sends the updated online device list to the SH chip; and the SH chip performs device discovery and keep alive based on the updated online device list. The online device list is updated in real time, so that it can be ensured that device discovery and keepalive are performed based on the reliable online device list.

In a possible implementation, the method further includes: If the second device is in the online device list, the SH chip replies to the second device with a broadcast message. The SH chip serves as the proxy of the AP processor to perform keepalive on the online device. This reduces device power consumption, and resolves the problem of slow networking caused by re-establishing the trust relationship due to frequent online and offline and the problem of the networking failure caused by single-end offline due to delayed interaction.

In a possible implementation, the proxy indication further carries a proxy reply template, and that the SH chip replies to the second device with a broadcast message includes: The SH chip replies to the second device with the broadcast message based on the proxy reply template. The SH chip serves as the proxy of the AP processor to perform reply keepalive on the online device. This reduces device power consumption, and resolves the problem of slow networking caused by re-establishing the trust relationship due to frequent online and offline and the problem of the networking failure caused by single-end offline due to delayed interaction.

In a possible implementation, the proxy indication further carries a broadcast ID and a scanning ID, and the method further includes: The AP processor modifies the broadcast strategy based on the broadcast ID and/or modifies the scanning strategy based on the scanning ID; the AP processor sends a modified broadcast strategy and/or scanning strategy to the SH chip; and the SH chip sends a broadcast according to the modified broadcast strategy, and/or performs scanning according to the modified scanning strategy. Real-time synchronization of the modified broadcast strategy and/or scanning strategy is performed, so that it can be ensured that the SH chip can perform the proxy of reliable device discovery and keep alive based on an actual situation.

In a possible implementation, the method further includes: The AP processor enters a sleep state after the AP processor sends the proxy indication to the SH chip. According to the method in this application, the AP processor does not need to repeatedly perform complex offline monitoring to determine whether the device is offline, but may enter the sleep state, and hand over a related online/offline monitoring task to the low-power-consumption SH chip. In this way, power consumption of the AP processor can be reduced. In addition, an early connection can be implemented through early discovery in a background, so that a user can perform direct transmission during use.

In a possible implementation, the method further includes: After the AP processor sends the proxy indication to the SH chip, the AP processor processes a service whose priority is higher than that of a device discovery and keepalive service. According to the method in this application, the AP processor does not need to repeatedly perform complex offline monitoring to determine whether the device is offline, but may process another service, for example, process a service whose priority is higher than that of the device discovery and keepalive service. In this way, it can be ensured that another service is not affected to a maximum extent.

In a possible implementation, the method further includes: The AP processor reclaims proxy permission of the SH chip. In this way, the AP processor may deliver and reclaim the proxy permission based on an actual requirement.

In a possible implementation, the method further includes: The AP processor establishes a Bluetooth low energy (Bluetooth low energy, BLE) connection to the second device based on the report of the SH chip. The BLE connection is established, so that a device that supports bidirectional communication, a fast communication speed, and a large quantity of connectable devices can be obtained for the connection, to implement better communication between devices on a network.

In a possible implementation, the method further includes: In a process in which the AP processor establishes the BLE connection to the second device based on the report of the SH chip, the AP processor stores an IRK and a service discovery handle that are of the second device; and when a quantity of devices on a network in which the first device resides is greater than a preset value, the AP processor establishes a fast BLE connection to the second device based on the IRK and the service discovery handle that are of the second device. The fast BLE connection is established when there are a large quantity of devices on the network, and a peer device is woken up through the fast BLE connection. This can avoid a broadcast storm, support bidirectional communication, improve a communication speed on the network, and allow another device to continue to join the network. In addition, because a most time-consuming BLE service discovery phase is skipped during establishment of the fast BLE connection, the BLE connection is established faster.

In a possible implementation, that the AP processor establishes a fast BLE connection to the second device based on the IRK and the service discovery handle that are of the second device includes: The AP processor invokes the service discovery handle, and resolves a random address of the second device based on the IRK of the second device, to obtain a real address of the second device; the AP processor establishes the connection to the second device based on the real address of the second device; and the AP processor and the second device exchange respective maximum transmission units (maximum transmission units, MTUs). The most time-consuming BLE service discovery phase may be skipped during connection establishment based on the pre-stored IRK and service discovery handle, so that the BLE connection is established faster.

In a possible implementation, the method further includes: The SH chip sends a directional notification to the second device through the fast BLE connection. The directional notification is sent, so that another irrelevant device is not disturbed, information can be accurately sent, and the broadcast storm existing in broadcast can be avoided.

In a possible implementation, that the SH chip discovers the second device through scanning means that the SH chip obtains a burst (burst) broadcast message from the second device through scanning. The burst broadcast message is sent, so that burst (burst) broadcast can be used to greatly increase a device discovery success rate compared with a regular broadcast. In addition, a Bluetooth chip does not need to be re-enabled when the burst broadcast changes from a high-frequency state to an idle state. Therefore, the Bluetooth chip does not need to be restarted, so that consumption of Bluetooth resources can be reduced, and an upper-layer continuous service cannot be interrupted. For example, it is assumed that the Bluetooth chip is performing a BLE connection. If the Bluetooth chip needs to be re-enabled when the broadcast message changes from a high-frequency state to an idle state, the BLE connection fails.

In a possible implementation, a manner of sending the burst broadcast message is: continuously sending, at an interval of first duration, a plurality of broadcast messages with an interval of third duration within second duration, where the first duration is greater than the third duration, and the second duration is greater than the third duration. For example, the first duration is a broadcast interval (burstInterval), the second duration is a packet sending window (burstWindow), and the third duration is a packet sending interval (advInterval).

In a possible implementation, the proxy indication further carries a device online condition, and that the SH chip discovers the second device through scanning means that the SH chip obtains, through scanning, a broadcast message that is from the second device and that meets the device online condition. The device online condition for determining that a device is online is set in the SH chip, so that it is determined, based on the specified device online condition in a process in which the SH chip serves as the proxy of the AP processor to perform the device discovery and keepalive work, whether the device is online. In this way, effective and reliable device online determining is implemented.

In a possible implementation, the proxy indication further carries a device offline condition, and the method further includes: When the SH chip scans a broadcast message that is from the second device and that meets the device offline condition, the SH chip determines that the second device is offline, and the SH chip reports, to the AP processor, that the second device is offline. The device offline condition for determining that a device is offline is set in the SH chip, so that it is determined, based on the specified device offline condition in a process in which the SH chip serves as the proxy of the AP processor to perform the device discovery and keepalive work, whether the device is offline. In this way, effective and reliable device offline determining is implemented.

In a possible implementation, the device offline condition includes: receiving no valid broadcast message from the second device within first preset duration, or receiving no valid broadcast message of a first preset quantity from the second device within first preset duration. The device online condition includes: receiving a valid broadcast message from the second device, or receiving, within second preset duration, a quantity of valid broadcast messages from the second device that is greater than a preset quantity. For example, the device offline condition is a determining condition in an onLost mode. The device online condition is a determining condition in an onFound mode.

In a possible implementation, signal strength of the valid broadcast message is greater than a preset signal strength threshold, for example, -78 dBm. In this way, effective and reliable device online/offline determining can be implemented.

In a possible implementation, after the AP processor establishes the BLE connection to the second device based on the report of the SH chip, the method further includes: The AP processor triggers master device election on the network; and after exchanging respective master device election parameters with the second device, the AP processor determines to serve as a master device on the network. Master device election on the network is performed, so that software and hardware clocks of a plurality of devices on the network can be aligned in a relay manner in a subsequent window synchronization process. This improves a hit rate of the broadcast message, and improves device discovery and keep alive performance.

In a possible implementation, after the AP processor determines to serve as the master device on the network, the method further includes: The AP processor sends an AP clock of the first device to the SH chip; the SH chip aligns a hardware clock of the first device based on a software and hardware clock offset of the first device; and the SH chip sends the hardware clock of the first device to the second device. For example, it is assumed that the AP clock of the first device is sysclk: 123, and the software and hardware clock offset is 24. In this case, the hardware clock (for example, btclk) of the first device is 123-24=99.

In a possible implementation, the method further includes: The second device aligns a hardware clock of the second device based on the hardware clock of the first device; and the second device aligns a system clock of the second device based on the hardware clock of the second device and a software and hardware clock offset of the second device. For example, it is assumed that the hardware clock of the first device is btclk: 99, and a hardware clock offset between the second device and the first device is -42. In this case, the hardware clock of the second device is 99-42=57.

In a possible implementation, the method further includes: The second device aligns a broadcast window and a scanning window with the first device based on the system clock of the second device, to send a broadcast message in an aligned broadcast window and perform scanning in an aligned scanning window.

In a possible implementation, the second device aligns the broadcast window and the scanning window based on the system clock of the second device by using a waiting or an advancing window offset. The broadcast window of the device is dynamically aligned with the scanning window of the peer device, and the scanning window of the device is aligned with the broadcast window of the peer device, so that a hit rate of the broadcast message can be increased, and a keepalive effect is significantly improved. Therefore, device discovery and keepalive performance can be improved. In addition, because software and hardware clocks of a plurality of devices can be aligned in a relay manner, window alignment on the network is more effective.

In a possible implementation, the second device adjusts a broadcast frequency of the second device based on the system clock of the second device, for the broadcast frequency of the second device to be in a multiple relationship with a scanning frequency of the first device, to periodically align the broadcast window; and/or the second device adjusts a scanning frequency of the second device based on the system clock of the second device, for the scanning frequency of the second device to be in a multiple relationship with a broadcast frequency of the first device, to periodically align the scanning window.

In a possible implementation, the master device election parameter indicates one or more of the following of the device: a device scenario, a device type, a device function, power supply information, a device status, a motion status, service information, and duration for entering the network. For example, the device scenario is a home scenario or a travel scenario; the device function is a communication capability; the power supply information is a power supply manner or a battery level; the device status is an active state or a sleep state; the motion status is a static state or a moving state; and the service information is whether a high-load service is being performed.

According to a second aspect, an inter-device connection management method is provided. The method includes: A first device serving as a master device on a network sends a hardware clock of the first device to a second device on the network; the second device aligns a hardware clock of the second device based on the hardware clock of the first device, and aligns a system clock of the second device based on an aligned hardware clock of the second device; and the second device aligns a broadcast window and a scanning window with the first device based on the system clock of the second device.

Optionally, the window alignment may be periodically performed, and the windows can always be aligned with high precision through periodic window alignment.

According to the solution provided in the second aspect, the master device on the network broadcasts the hardware clock of the master device, and then a slave device adjusts the hardware clock and an AP clock of the slave device based on the foregoing information, so that the hardware clock and the AP clock of the slave device is separately synchronized with the hardware clock and the AP clock of the master device. Further, the slave device adjusts a broadcast parameter based on an adjusted hardware clock and AP clock, and then an SH chip of the slave device may send a broadcast message in a broadcast window aligned with a scanning window of the master device; and adjusts a scanning parameter based on the adjusted hardware clock and AP clock, and then the SH chip of the slave device may scan the broadcast message in a scanning window aligned with a broadcast window of the master device. In this way, a hit rate of the broadcast message can be increased, and device discovery and keepalive performance can be improved. In addition, because software and hardware clocks of a plurality of devices can be aligned in a relay manner, window alignment of the plurality of devices on the network is more effective.

In a possible implementation, the method further includes: Devices on the network perform master device election on the network when a preset condition is met. Master device election on the network is performed, so that software and hardware clocks of a plurality of devices on the network can be aligned in a relay manner in a subsequent window synchronization process. This improves a hit rate of the broadcast message, and improves device discovery and keepalive performance.

In a possible implementation, the preset condition includes: A new device joins the network, a device exits the network, and a previous master device no longer serves as the master device. Master device election on the network is triggered, so that software and hardware clocks of a plurality of devices on the network can be aligned in a relay manner in a subsequent window synchronization process. This improves a hit rate of the broadcast message, and improves device discovery and keepalive performance.

In a possible implementation, that devices on the network perform master device election on the network includes: The devices on the network exchange respective master device election parameters, and determine the master device on the network by comparing the master device election parameters of the devices on the network. The master device on the network is determined based on the master device election parameters, so that a subsequent capability, performance, and the like of the master device can be ensured.

In a possible implementation, the master device election parameter indicates one or more of the following of the device: a device scenario, a device type, a device function, power supply information, a device status, a motion status, service information, and duration for entering the network. For example, the device scenario is a home scenario or a travel scenario; the device function is a communication capability; the power supply information is a power supply manner or a battery level; the device status is an active state or a sleep state; the motion status is a static state or a moving state; and the service information is whether a high-load service is being performed. The master device on the network is determined based on the foregoing device-related information, so that a subsequent capability, performance, and the like of the master device can be ensured.

In a possible implementation, the method further includes: An AP processor of the first device sends an AP clock of the first device to an SH chip of the first device; and the SH chip of the first device aligns the hardware clock of the first device based on a software and hardware clock offset of the first device. For example, it is assumed that the AP clock of the first device is sysclk: 123, and the software and hardware clock offset is 24. In this case, the hardware clock (for example, btclk) of the first device is 123-24=99.

In a possible implementation, that the second device aligns a hardware clock of the second device based on the hardware clock of the first device, and aligns a system clock of the second device based on an aligned hardware clock of the second device includes: An SH chip of the second device aligns the hardware clock of the second device based on the hardware clock of the first device; the SH chip of the second device sends the hardware clock of the second device to an AP processor of the second device; and the AP processor of the second device aligns the system clock of the second device based on the hardware clock of the second device and the software and hardware clock offset of the second device. For example, it is assumed that the hardware clock of the first device is btclk: 99, and a hardware clock offset between the second device and the first device is -42. In this case, the hardware clock of the second device is 99-42=57.

In a possible implementation, that the second device aligns a broadcast window and a scanning window with the first device based on the system clock of the second device includes: The AP processor of the second device aligns the broadcast window and the scanning window based on the system clock of the second device by using a waiting or an advancing window offset.

In a possible implementation, that the second device aligns a broadcast window and a scanning window with the first device based on the system clock of the second device includes: The AP processor of the second device adjusts a broadcast frequency of the second device based on the system clock of the second device, for the broadcast frequency of the second device to be in a multiple relationship with a scanning frequency of the first device, to periodically align the broadcast window; and/or the AP processor of the second device adjusts a scanning frequency of the second device based on the system clock of the second device, for the scanning frequency of the second device to be in a multiple relationship with a broadcast frequency of the first device, to periodically align the scanning window.

According to a third aspect, an inter-device connection management method is provided. The method includes: An AP processor of a first device sends a proxy indication to an SH chip of the first device, where the proxy indication carries a device online condition, a broadcast strategy, and a scanning strategy, and the proxy indication indicates the SH chip to serve as a proxy of the AP processor to perform device discovery and keepalive; the SH chip sends a broadcast message according to the broadcast strategy, and performs scanning according to the scanning strategy; and when the SH chip obtains, through scanning, a broadcast message that is from a second device and that meets the device online condition, reporting, by the SH chip to the AP processor, that the second device is online.

According to the solution provided in the third aspect, the AP processor sets, in the SH chip, the device online condition for determining that a device is online, so that it is determined, based on the specified device online condition in a process in which the SH chip serves as the proxy of the AP processor to perform device discovery and keepalive work, whether the device is online. In this way, the AP processor does not need to repeatedly perform complex online monitoring to determine whether the device is online, but may enter a sleep state, and hand over a related online monitoring task to the low-power-consumption SH chip. Then, the SH chip determines, by determining whether the preset condition for determining that the device is online is met, whether the device is online. If it is determined that the device is online, the SH chip wakes up the AP processor to perform connection authentication on the discovery device. In this way, power consumption of the AP processor can be reduced. In addition, an early connection can be implemented through early discovery in a background, so that a user can perform direct transmission during use.

In a possible implementation, the method further includes: The AP processor establishes a pairing connection to the second device based on the report of the SH chip after the SH chip reports that the second device is online. In this way, power consumption of the AP processor can be reduced, and the early connection can be implemented through early discovery in the background, so that the user can perform direct transmission during use.

In a possible implementation, a trust relationship is established between the first device and the second device, the proxy indication further carries a device offline condition, and the method further includes: When the SH chip obtains, through scanning, a broadcast message that is from the second device and that meets the device offline condition, the SH chip reports, to the AP processor, that the second device is offline. The device offline condition for determining that a device is offline is set in the SH chip, so that it is determined, based on the specified device offline condition in a process in which the SH chip serves as the proxy of the AP processor to perform the device discovery and keepalive work, whether the device is offline. In this way, power consumption of the AP processor is reduced, and effective and reliable device offline determining can be implemented.

In a possible implementation, the method further includes: The AP processor cancels the trust relationship with the second device based on the report of the SH chip. In this way, power consumption of the AP processor is reduced, the trust relationship between devices can be cancelled in a timely manner through the effective and reliable device offline determining in the background.

In a possible implementation, the device offline condition includes: receiving no valid broadcast message from the second device within first preset duration, or receiving no valid broadcast message of a first preset quantity from the second device within first preset duration. The device online condition includes: receiving a valid broadcast message from the second device, or receiving, within second preset duration, a quantity of valid broadcast messages from the second device that is greater than a preset quantity. For example, the device offline condition is a determining condition in an onLost mode. The device online condition is a determining condition in an onFound mode.

In a possible implementation, signal strength of the valid broadcast message is greater than a preset signal strength threshold, for example, -78 dBm. In this way, effective and reliable device online/offline determining can be implemented.

According to a fourth aspect, an inter-device connection management method is provided. The method includes: A second device sends a broadcast message; when obtaining the broadcast message through scanning, a first device determines that the second device is online; and the first device establishes a pairing connection to the second device.

According to the solution provided in the fourth aspect, a unidirectional declarative broadcast sending manner is used, so that half of time used for device discovery can be reduced. This can greatly reduce a device discovery delay, reduce device power consumption, and save communication resources. Particularly, in a scenario in which there is a multi-device discovery and connection networking requirement, the unidirectional declarative broadcast sending manner is used, so that the device discovery delay can be greatly reduced, device power consumption can be reduced, a broadcast storm can be avoided, interference between devices can be avoided, and a device discovery success rate can be increased.

In a possible implementation, the broadcast message sent by the second device is a burst broadcast. The burst broadcast message is sent, so that the burst (burst) broadcast can be used to greatly increase the device discovery success rate compared with a regular broadcast. In addition, a Bluetooth chip does not need to be re-enabled when the burst broadcast changes from a high-frequency state to an idle state. Therefore, the Bluetooth chip does not need to be restarted, so that consumption of Bluetooth resources can be reduced, and an upper-layer continuous service cannot be interrupted. For example, it is assumed that the Bluetooth chip is performing a BLE connection. If the Bluetooth chip needs to be re-enabled when the broadcast message changes from a high-frequency state to an idle state, the BLE connection fails.

In a possible implementation, a manner of sending the burst broadcast message is: continuously sending, at an interval of first duration, a plurality of broadcast messages with an interval of third duration within second duration, where the first duration is greater than the third duration, and the second duration is greater than the third duration. For example, the first duration is a broadcast interval (burstInterval), the second duration is a packet sending window (burstWindow), and the third duration is a packet sending interval (advInterval).

In a possible implementation, the method further includes: The second device switches the burst broadcast message to a BLE broadcast message when a preset condition is met. For example, the second device may send the burst broadcast message when a screen of the second device is in a screen-on state, and switch to sending a regular broadcast message (for example, a BLE broadcast message) when the screen of the second device is in a screen-off state. Alternatively, the second device may send the burst broadcast message when a quantity of devices around the second device is less than or equal to a preset value (for example, 20), and send the regular broadcast message (for example, the BLE broadcast message) when the quantity of devices around the second device is greater than the preset value (for example, 20). Alternatively, the second device may send the burst broadcast message when accumulated foreground running duration of a discovery process does not exceed preset duration (for example, 5 seconds), and then switch to sending the regular broadcast message (for example, the BLE broadcast message).

In a possible implementation, that the first device establishes a pairing connection to the second device includes: The first device establishes a BLE connection to the second device. The BLE connection is established, so that a device that supports bidirectional communication, a fast communication speed, and a large quantity of connectable devices can be obtained for the connection, to implement better communication between devices on a network.

According to a fifth aspect, an inter-device connection management method is provided. The method includes: A first device stores an IRK and a service discovery handle that are of a second device in a process of connection authentication between the first device and the second device; when a quantity of devices on a network in which the first device resides is greater than a preset value, the first device establishes a fast BLE connection to the second device based on the IRK and the service discovery handle that are of the second device.

According to the solution provided in the fifth aspect, the device establishes the fast BLE connection when there are a large quantity of devices on the network, and a peer device is woken up through the fast BLE connection. This can avoid a broadcast storm, support bidirectional communication, improve a communication speed on the network, and allow another device to continue to join the network. In addition, because a most time-consuming BLE service discovery phase is skipped during establishment of the fast BLE connection, the BLE connection is established faster. In addition, the most time-consuming BLE service discovery phase may be skipped during connection establishment based on the pre-stored IRK and service discovery handle, so that the BLE connection is established faster.

In a possible implementation, that the first device establishes a fast BLE connection to the second device based on the IRK and the service discovery handle that are of the second device includes: The first device invokes the service discovery handle, and resolves a random address of the second device based on the IRK of the second device, to obtain a real address of the second device; the first device establishes the connection to the second device based on the real address of the second device; and the first device and the second device exchange respective MTUs. The most time-consuming BLE service discovery phase may be skipped during connection establishment based on the pre-stored IRK and service discovery handle, so that the BLE connection is established faster.

In a possible implementation, the method further includes: An SH chip sends a directional notification to the second device through the fast BLE connection. The directional notification is sent, so that another irrelevant device is not disturbed, information can be accurately sent, and the broadcast storm existing in broadcast can be avoided.

According to a sixth aspect, an electronic device is provided. The electronic device includes an AP processor and an SH chip. The AP processor and the SH chip are configured to support the electronic device in implementing the possible method and process related to the first device or the second device according to any one of the possible implementations of the first aspect, the second aspect, the third aspect, the fourth aspect, and the fifth aspect.

According to a seventh aspect, a multi-device network is provided. The multi-device network includes a first device and a second device. The first device and the second device are configured to support the multi-device network in implementing the possible method according to any one of the possible implementations of the first aspect, the second aspect, the third aspect, the fourth aspect, and the fifth aspect.

According to an eighth aspect, a computer-readable storage medium is provided. The computer-readable storage medium stores computer-readable instructions. When the computer-readable instructions are executed by a processor, the method according to any one of the possible implementations of the first aspect, the second aspect, the third aspect, the fourth aspect, and the fifth aspect is implemented.

According to a ninth aspect, a chip system is provided. The chip system includes a processor and a memory. The memory stores instructions. When the instructions are executed by the processor, the method according to any one of the possible implementations of the first aspect, the second aspect, the third aspect, the fourth aspect, and the fifth aspect is implemented. The chip system may include a chip, or may include a chip and another discrete component.

According to a tenth aspect, a computer program product is provided, and includes computer-readable instructions. When the computer-readable instructions are run on a computer, the method according to any one of the possible implementations of the first aspect, the second aspect, the third aspect, the fourth aspect, and the fifth aspect is implemented.

### BRIEF DESCRIPTION OF DRAWINGS

FIG. 1 is a diagram of a regular process of establishing a communication connection between devices;
FIG. 2 is a diagram of a hardware structure of an electronic device according to an embodiment of this application;
FIG. 3 is a diagram of a system framework of an electronic device according to an embodiment of this application;
FIG. 4 is a diagram of an architecture of a distributed soft bus according to an embodiment of this application;
FIG. 5A is a diagram of interaction in an inter-device connection management process according to an embodiment of this application;
FIG. 5B is an effect diagram of discovering a device in advance in a background according to an embodiment of this application;
FIG. 6 is a diagram of a device discovery process according to a unidirectional declarative discovery strategy according to an embodiment of this application;
FIG. 7 is a flowchart of a device discovery process according to an embodiment of this application;
FIG. 8 is a diagram of a regular broadcast message sending strategy;
FIG. 9 is a diagram of a sending strategy of a burst (burst) broadcast message according to an embodiment of this application;
FIG. 10 is a comparison diagram of hit effects of different types of broadcast messages according to an embodiment of this application;
FIG. 11 is a flowchart of another device discovery process according to an embodiment of this application;
FIG. 12 is a logic diagram of determining an OnFound mode/OnLost mode according to Embodiment 3 of this application;
FIG. 13 is a flowchart of a window alignment process according to an embodiment of this application;
FIG. 14 is a diagram of a case of triggering master device election on a network according to an embodiment of this application;
FIG. 15 is a diagram of another case of triggering master device election on a network according to an embodiment of this application;
FIG. 16 is a diagram of a clock alignment process according to an embodiment of this application;
FIG. 17 is a comparison diagram of hit effects of a broadcast message according to an embodiment of this application;
FIG. 18 is a diagram of a process of yielding to a high-priority service according to an embodiment of this application;
FIG. 19A is a diagram 1 of a network structure according to an embodiment of this application;
FIG. 19B is a diagram 2 of a network structure according to an embodiment of this application;
FIG. 20 is a diagram 3 of a network structure according to an embodiment of this application; and
FIG. 21 is a flowchart of a process of establishing a fast BLE connection according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions in embodiments, unless otherwise specified, "a plurality of" means two or more.

Embodiments of this application provide an inter-device connection management method. The method relates to a discovery manner, a communication connection establishment manner, a keepalive manner, a communication connection cancellation manner, a manner of aligning a broadcast window and a scanning window, and the like between devices.

It should be noted that the method provided in embodiments of this application is applicable to a one-to-one device discovery and connection scenario (for example, a scenario in which a device A discovers a device B), and is also applicable to a scenario of multi-device discovery and connection networking requirement (in other words, a networking scenario in which a plurality of devices are discovered and are connected to each other to implement networking). This is not limited in embodiments of this application. For example, the networking scenario is a distributed service scenario, including a gallery scenario, a distributed file management scenario, a distributed scheduling scenario, and a hiplay^{®} scenario.

The device in embodiments of this application is an electronic device, for example, a smartphone, a netbook, a tablet computer, a wearable device (for example, a smart watch, a smart band, a sports watch, a phone watch, or a wireless headset), a smart camera, a palmtop computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device (for example, AR/VR glasses or an AR/VR head), a projection device, or a somatic game console in a human-machine interaction scenario. Alternatively, the electronic device may be an Internet of things (Internet of things, IOT) device, for example, a smart home device like a smart television, a smart speaker, a smart door lock, a smart light, a smart camera, a smart robotic vacuum cleaner, a smart air purifier, a smart air conditioner, a smart peephole, a smart curtain, a smart clothes hanger, or a smart switch. Alternatively, the electronic device may be an electronic device of another type or structure. A specific structure, a specific function, and the like of the electronic device are not limited in this application.

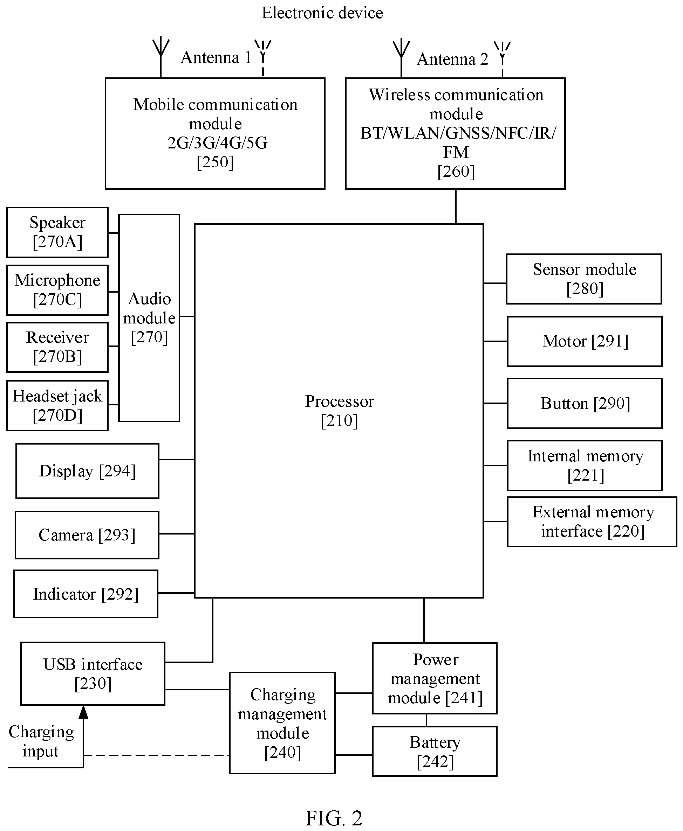

FIG. 2 is a diagram of a hardware structure of an electronic device according to an embodiment of this application.

As shown in FIG. 2, the electronic device may include a processor 210, a memory (including an external memory interface 220 and an internal memory 221), a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, and the like. The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, or a combination of some components, or splits from some components, or an arrangement of different components. The components shown in the figure may be implemented by using hardware, software, or a combination of software and hardware.

The processor 210 may include one or more processing units. For example, the processor 210 may include an application processor (AP processor for short), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or the like. Different processing units may be independent components, or may be integrated into one or more processors.

In embodiments of this application, the AP processor is configured to be responsible for execution of an operating system, display of a user interface, response to an application, and the like.

The AP processor may be further configured to control, based on an application service requirement, hardware of the electronic device, for example, a sensor, a Bluetooth chip, an NFC chip, or a Wi-Fi chip, to execute a corresponding task. For example, the AP processor may control, based on a data collection requirement of a health application, the sensor to collect health data of a user. For another example, the AP processor may control, based on a networking requirement of a networking application, the Bluetooth chip or the Wi-Fi chip to send a broadcast message, to perform device discovery.

Alternatively, the AP processor may perform another process related to this application. This is specifically described in subsequent embodiments.

The memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access, and reduces waiting time of the processor 210, to improve system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 240 is configured to receive a charging input from a charger. In some embodiments of wired charging, the charging management module 240 may receive a charging input of a wired charger through the USB interface 230. In some embodiments of wireless charging, the charging management module 240 may receive a wireless charging input through a wireless charging coil of the electronic device. When charging the battery 242, the charging management module 240 may further supply power to the electronic device through the power management module 241.

The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like.

A wireless communication function of the electronic device may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a solution, applied to the electronic device, to wireless communication including 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1. In some embodiments, at least some function modules in the mobile communication module 250 may be disposed in the processor 210. In some embodiments, at least some function modules in the mobile communication module 250 may be disposed in a same component as at least some modules in the processor 210.

The modem processor may include a modulator and a demodulator. The modulator is configured to modulate a to-be-sent low-frequency baseband signal into a medium- and high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the AP processor. The AP processor outputs a sound signal through an audio device (which is not limited to the speaker 270A, the receiver 270B, or the like), or displays an image or a video through the display 294. In some embodiments, the modem processor may be an independent component. In some other embodiments, the modem processor may be independent of the processor 210, and is disposed in a same device as the mobile communication module 250 or another functional module.

The wireless communication module 260 may provide a solution, applied to the electronic device, to wireless communication including a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 260 may be one or more components integrating at least one communication processing module. The wireless communication module 260 receives an electromagnetic wave through the antenna 2, performs frequency modulation and filter processing on the electromagnetic wave signal, and sends a processed signal to the processor 210. The wireless communication module 260 may further receive a to-be-sent signal from the processor 210, perform frequency modulation and amplification on the signal, and convert a processed signal into an electromagnetic wave for radiation through the antenna 2.

In some embodiments, in the electronic device, the antenna 1 and the mobile communication module 250 are coupled, and the antenna 2 and the wireless communication module 260 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function through the GPU, the display 294, the AP processor, and the like. The GPU is a microprocessor for image processing, and is connected to the display 294 and the AP processor. The GPU is configured to: perform mathematical and geometric computation, and render an image. The processor 210 may include one or more GPUs, which execute program instructions to generate or change display information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 294, where N is a positive integer greater than 1.

The electronic device may implement a photographing function through the ISP, the camera 293, the video codec, the GPU, the display 294, the AP processor, and the like.

The external memory interface 220 may be configured to connect to an external memory card, for example, a micro SD card, to extend a storage capability of the electronic device. The external memory card communicates with the processor 210 through the external memory interface 220, to implement a data storage function. For example, files such as music and videos are stored in the external memory card.

The internal memory 221 may be configured to store computer executable program code. For example, a computer program may include an operating system program and an application. The operating system may include but is not limited to operating systems such as Symbian^{®} (Symbian^{®}), Android^{®} (Android^{®}), Microsoft^{®} Windows^{®}, Apple iOS^{®}, Blackberry^{®} (Blackberry^{®}), and Harmony^{®} (Harmony^{®}) OS. The executable program code includes instructions. The processor 210 runs the instructions stored in the internal memory 221, to perform various function applications and data processing of the terminal device. The internal memory 221 may include a program storage area and a data storage area. The program storage area may store an operating system, an application required by at least one function, and the like. The data storage area may store data (for example, an online device list) created during use of the electronic device, and the like. In addition, the internal memory 221 may include a highspeed random access memory, and may further include a non-volatile memory, for example, at least one magnetic disk storage device, a flash memory, or a universal flash storage (universal flash storage, UFS). The processor 210 runs instructions stored in the internal memory 221 and/or instructions stored in the memory disposed in the processor, to perform various function applications and data processing of the electronic device.

The electronic device may implement an audio function, for example, music playing or recording, through the audio module 270, the speaker 270A, the receiver 270B, the microphone 270C, the AP processor, and the like. For specific working principles and functions of the audio module 270, the speaker 270A, the receiver 270B, and the microphone 270C, refer to descriptions in the conventional technology.

In addition, for descriptions of hardware such as the button 290, the motor 291, and the indicator 292, refer to the conventional technology. Details are not described again in embodiments of this application.

It may be understood that the structure shown in FIG. 2 in this application does not constitute a specific limitation on the electronic device. In some other embodiments of this application, the electronic device may include more or fewer components than those shown in the figure, or a combination of some components, or splits from some components, or an arrangement of different components. The components shown in the figure may be implemented by using hardware, software, or a combination of software and hardware.

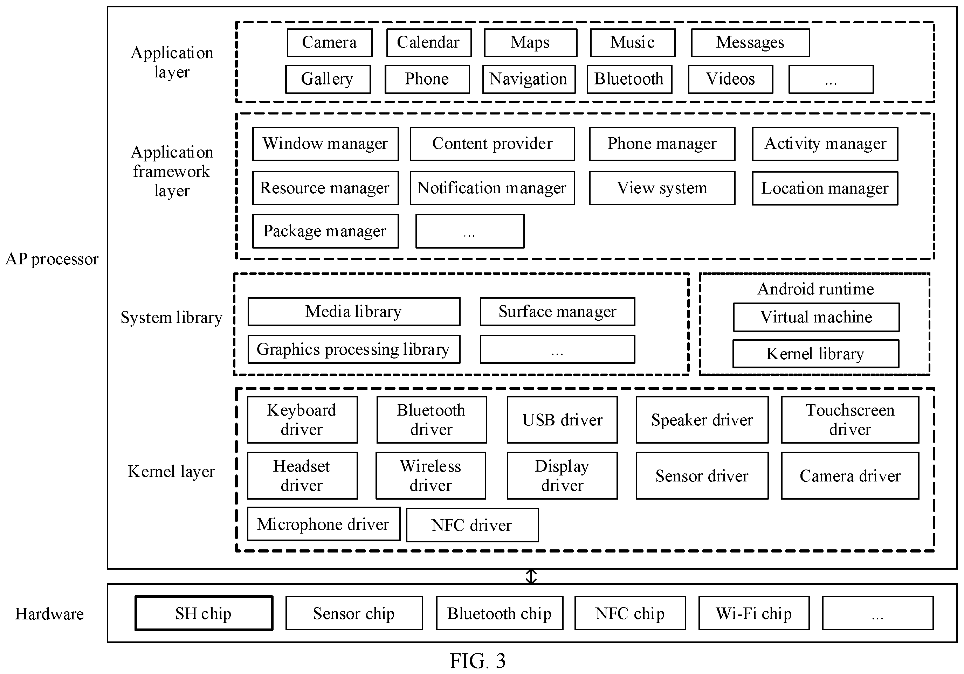

For example, the operating system of the electronic device is an Android^{®} operating system. A system architecture of the electronic device may be shown in FIG. 3.

As shown in FIG. 3, the operating system of the electronic device may include an application layer, an application framework (framework, FWK) layer, a system library, an Android runtime, and a kernel (Kernel) layer. As shown in FIG. 3, a software system of the electronic device runs on an application processor (namely, an AP processor).

The application layer may include a series of application packages, for example, applications such as Camera, Gallery, Calendar, Phone, Maps, Navigation, Bluetooth, Music, Videos, and Messages. For ease of description, an application program is briefly described as an application below. An application on the electronic device may be a native application (for example, an application installed on the electronic device when an operating system is installed before the electronic device is delivered from a factory), or may be a third-party application (for example, an application downloaded and installed by a user by using an application store). This is not limited in embodiments of this application.

The application framework layer provides an application programming interface (application programming interface, API) and a programming framework for an application at the application layer. As shown in FIG. 3, the application framework layer may include a window manager (window manager), an activity manager (activity manager), a package manager (package manager), a content provider (content provider), a view system (view system), a phone manager (phone manager), a resource manager (resource manager), a notification manager (notification manager), a location manager (location manager), and the like.

The window manager carries data and an attribute that are related to an "interface" (for example, a task interface), and is configured to manage a status related to the "interface", for example, configured to manage a window program and dispatch an event. The managing a window program includes sequentially outputting to a physical screen or another display device based on a display request of an application under assistance of an application server and a WMS. Dispatching an event means dispatching a user event from a keyboard, a physical button, a touchscreen, or a mouse to a corresponding control or window. A window management service may obtain a size of a display, determine whether there is a status bar, perform screen locking, take a screenshot, and the like.

The activity manager is configured to manage an activity, and is responsible for work such as startup, switching, and scheduling of each component in a system, and management and scheduling of applications.

The package manager may be configured to manage a program in the Android^{®} system.

The content provider may be configured to support one application in accessing data of another application (for example, a contact database), or sharing data of the application with another application. The data may include a video, an image, audio, calls that are made and received, a browsing history, a bookmark, a phone book, and the like.

The view system may be configured to construct a display interface of an application. The view system includes a visual control, for example, a text box (TextBox) control, a list (List) control, a grid (Grid) control, a button (Button) control, and a web browser control that can be embedded. A display interface may include one or more views. For example, a display interface including an SMS message notification icon may include a view for displaying a text and a view for displaying an image.

The phone manager may be configured to: provide an obtaining method for accessing a status and information that are related to communication of a mobile phone, and provide a communication function of the electronic device, for example, management of a call status (including answering, declining, or the like).

The resource manager may be configured to provide access to a non-code resource, for example, access to a local character string, an icon, an image, a graph, a video file, or a layout file (Layoutfile).

The notification manager may be configured to provide a function of displaying customized prompt information in a status bar. The prompt information may be used to convey a notification message, and may automatically disappear after a short pause without requiring user interaction. For example, the notification manager is configured to notify download completion, give a message notification, and the like. The notification manager may alternatively be a notification that appears in a top status bar of the system in a form of graph or scroll bar text, for example, a notification of an application that runs on a background, or may be a notification that appears on a screen in a form of dialog window. For example, text information is displayed in the status bar, a prompt tone is emitted, the electronic device vibrates, or an indicator blinks.

The location manager may be configured to provide a method for handling a geographical location-related problem.

The system library and Android runtime include a functional function that needs to be invoked by the application framework layer. The Android runtime includes a kernel library and a virtual machine. The system library may include a plurality of functional modules. For example, as shown in FIG. 3, the system library includes a surface manager (surface manager), a media library (Media Library), and a graphics processing library.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The surface manager is configured to: manage a display subsystem, and provide fusion of 2D and 3D layers for a plurality of applications.

The graphics processing library is configured to implement three-dimensional or two-dimensional image processing, image drawing (for example, layer drawing), image rendering (for example, layer rendering), image synthesis (for example, layer synthesis), and the like.

For example, the graphics processing library may be an OpenGL ES (open graphics library (open graphics library, OpenGL) for embedded systems), a skia OpenGL (skiaGL for short), a skia vulkan (skiaVK for short) or the like. This is not limited in this application. For specific descriptions of the graphics processing library, refer to the conventional technology.

The kernel layer is a layer between hardware and software. The kernel layer may include a display driver, an input/output device driver (for example, a keyboard driver, a touchscreen driver, and a microphone driver), a camera driver, an audio driver (for example, a headset driver and a speaker driver), a sensor driver, a wireless driver, a USB driver, a Bluetooth driver, an NFC driver, and the like.

The hardware includes a sensor hub (SensorHub, SH) chip, a sensor chip, a Bluetooth chip, an NFC chip, a Wi-Fi chip, and the like shown in FIG. 3.

To provide a user with faster, more reliable, and more energy-saving inter-device communication connection establishment experience, embodiments of this application provide an inter-device connection management method. The method may be implemented based on a near field communication function of a distributed soft bus architecture.

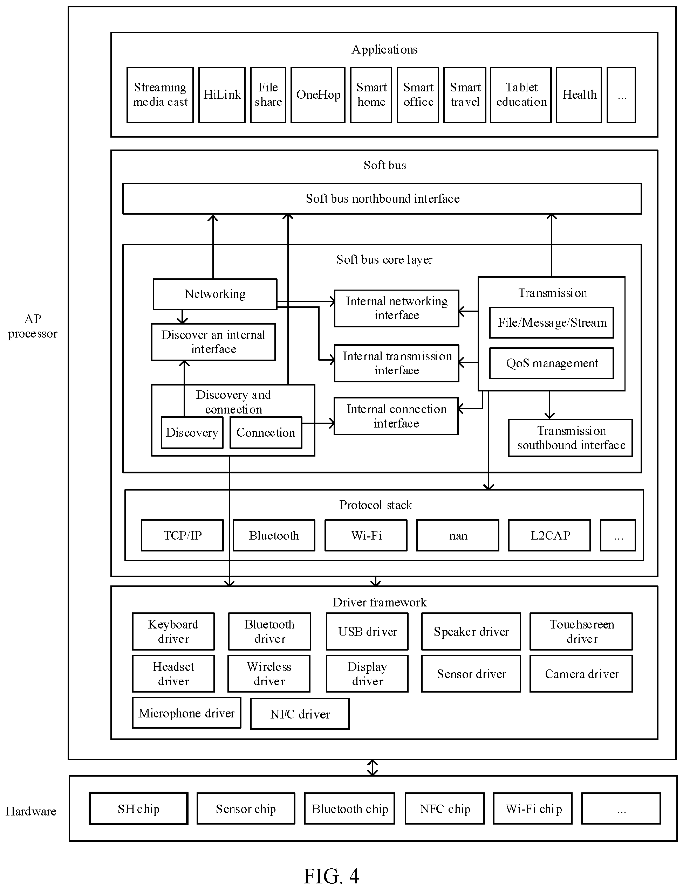

For example, an operating system of an electronic device is a Harmony^{®} (Harmony^{®}) operating system. The distributed soft bus architecture may be shown in FIG. 4. As shown in FIG. 4, the distributed soft bus architecture may include applications, a soft bus (for example, a distributed soft bus), a protocol stack, and a driver foundation (hardware driver foundation, HDF) from top to bottom.

The applications include a streaming media cast (Cast+) application, a HiLink software development kit (software development kit, SDK), file share (share), OneHop (OneHop), smart home, smart office, smart travel, tablet education, and health that can implement related functions based on distributed networking (networking applications for short).

The soft bus includes a soft bus northbound interface and a soft bus core layer. In this embodiment of this application, the soft bus core layer is mainly responsible for device discovery, connection establishment, information (for example, a file/message/stream) transmission between devices, quality of service (quality of service, QoS) management, distributed networking, and the like.

The protocol stack is, for example, a transmission control protocol/internet protocol (transmission control protocol/internet protocol, TCP/IP) stack, a Bluetooth protocol stack, a Wi-Fi protocol stack, a nan protocol stack, or a logical link control and adaptation protocol (logical link control and adaptation protocol, L2CAP) stack.

The driver foundation is a layer between hardware and software. The driver foundation may include a display driver, an input/output device driver (for example, a keyboard driver, a touchscreen driver, and a microphone driver), a camera driver, an audio driver (for example, a headset driver and a speaker driver), a sensor driver, a wireless driver, a USB driver, a Bluetooth driver, an NFC driver, and the like.

The hardware includes an SH chip, a sensor chip, a Bluetooth chip, an NFC chip, a Wi-Fi chip, and the like shown in FIG. 4.

The SH chip usually serves as an independently running low-power-consumption chip, and is located between the AP processor and various sensors (sensors) (such as the sensor chip, the Bluetooth chip, the NFC chip, and the Wi-Fi chip). The SH chip mainly has the following functions. When the AP processor is in a sleep state, the SH chip serves as a proxy of the AP processor to implement real-time control on a sensor, to reduce power consumption, and integrates data of different types of sensors, to implement a function that can be implemented only based on a combination of data of a plurality of sensors. The SH chip can resolve a disadvantage that when a sensor is mounted on the AP processor, the sensor can work normally only when the AP processor is in an active (active) state. In addition, it usually takes long time for the sensor to frequently report collected data to the AP processor for processing. Therefore, in this application, the SH chip serves as the proxy of the AP processor to implement real-time control on the sensor, to avoid problems of high power consumption of the AP and a long processing delay when the sensor is mounted on the AP processor.

Optionally, the SH chip may serve as the proxy of the AP processor based on an ARM cortex M4 processor, to implement real-time control on the sensor and perform simple data processing.

Optionally, when a preset condition is met, the SH chip may further wake up the AP processor to end proxy work of the SH chip. For example, the preset condition is: receiving a preset input event.

Optionally, the SH chip may alternatively end proxy work of the SH chip based on an indication of the AP processor.

Alternatively, the SH chip may perform another process related to this application. This is specifically described in subsequent embodiments.

The system architecture shown in FIG. 4 is used as an example. When a networking application of a device A has a networking requirement, a soft bus of the device A may invoke related hardware (such as the Bluetooth chip and the Wi-Fi chip) to implement device discovery (for example, discovery of a device B, a device C, and a device D), establish a connection (for example, establishing the connection to the discovered device B, the discovered device C, and the discovered device D), complete distributed networking, and the like.

According to the inter-device connection management method provided in embodiments of this application, a fast, reliable, and energy-saving inter-device communication connection may be established by using one or more of the following technology 1 to technology 5.

Technology 1: Use a unidirectional declarative discovery strategy during device discovery.

The unidirectional discovery strategy means that the device A broadcasts, to a peripheral device (including the device B), a capability supported by the device A, and if the device B obtains a broadcast message through scanning, the device B successfully discovers the device A.

Compared with the inquiry-based device discovery process shown in FIG. 1, the device discovery process is performed according to the unidirectional declarative discovery strategy, so that time consumed for device discovery can be greatly shortened, a delay during device discovery can be reduced, and communication resources and device power consumption can be reduced. In addition, according to the unidirectional declarative discovery strategy, in a scenario in which there is a multi-device discovery and connection networking requirement, a delay during device discovery can be reduced, communication resources and device power consumption can be reduced, a broadcast storm problem can be avoided, interference between devices can be avoided, and a device discovery success rate can be increased.

Technology 2: Maintain a real-time and reliable online device list.

A main idea of the technology 2 is described below. After the device B successfully discovers and establishes a communication connection to a device, the device B updates the online device list (or a connected device list). The online device list may be updated by the AP processor and synchronized to the SH chip. Then, the AP processor of the device B may enter a sleep state, and the SH chip serves as a proxy of the AP processor to work. After the device B obtains a broadcast message from another device through scanning, if the SH chip determines that the device is in the online device list, the SH chip may reply to the broadcast message based on a preset proxy reply template, to maintain a communication connection between the devices; or if the SH chip determines that the device is not in the online device list, the SH chip may wake up the AP processor to perform device connection authentication.

It may be understood that, in a conventional device discovery technology, because the AP processor is always responsible for controlling device discovery and connection and the like, the AP processor is usually in a high power consumption state. Especially in a scenario in which there is a multi-device discovery and connection networking requirement, the AP processor is always in the high power consumption state. In addition, a large quantity of invalid broadcasts further cause a broadcast storm, and quick consumption of hardware resources leads to no resource available for normal discovery, connection, and transmission. In addition, in the conventional device discovery technology, once one end does not reply to a message within a timeout period (for example, more than 10 seconds) (for example, does not reply to a message within a timeout period due to screen-off, a packet loss, another service being performed, or the like), a trust relationship (for example, a pairing relationship) between devices is cancelled. If there is a transmission requirement, discovery and connection need to be performed again. Therefore, there is no good keepalive mechanism in the conventional device discovery technology.

However, in this embodiment of this application, the real-time and reliable online device list is maintained, so that when there is no newly discovered device, the SH chip can serve as the proxy of the AP processor to work, and the devices between which the connection has been established can maintain the trust relationship at the low-power-consumption SH chip layer. In this way, power consumption of the AP processor can be reduced. In addition, an early connection can be implemented through early discovery in a background, so that a user can perform direct transmission during use. In addition, according to a keepalive strategy with low power consumption and high performance provided in this embodiment of this application, if another application wakes up the AP processor to perform another discovery and connection service, the SH chip may perform conflict avoidance on a task of the AP processor by monitoring a status of a protocol stack. For example, it is assumed that the AP processor is performing a basic rate (basic rate, BR) Bluetooth audio connection task. The SH chip actively performs temporary delay avoidance after monitoring a status of the Bluetooth protocol stack.

Technology 3: Set, in the SH chip, a preset condition for determining that a device is offline/online, and when the preset condition is met, determine that the device is offline/online.

For example, the preset condition for determining that the device is offline is: receiving, within preset duration, no broadcast message whose signal strength is greater than a preset signal strength threshold. For example, the preset condition for determining that the device is online is: receiving a preset quantity of broadcast messages whose signal strength is greater than a preset signal strength threshold.

A main idea of the technology 3 is described below. The preset condition for determining that the device is offline, for example, the preset condition in which no broadcast message whose signal strength is greater than the preset signal strength threshold is received within the preset duration, is set in the SH chip, so that when the preset condition is met, it is determined that the device is offline. Similarly, the preset condition for determining that the device is online, for example, the preset condition in which a plurality of consecutive broadcast messages whose signal strength is greater than the preset signal strength threshold is received, is set in the SH chip, so that when the preset condition is met, it is determined that the device is online. If no device is online or offline, the AP processor may be always in the sleep state, and the SH chip serves as the proxy of the AP processor to perform device discovery and keepalive work, and wakes up the AP processor only when the SH chip determines that a device is online or offline.

It may be understood that, in the conventional device discovery technology, the AP processor is always responsible for controlling device discovery and connection and the like, and a strategy for determining that the device is offline is that when a threshold (for example, no reply message is received within preset duration) specified for a service is met, the AP processor determines that the device is offline, and cancels a trust relationship between devices. In this case, the AP processor needs to periodically poll whether the reply message is received. If no reply message is received within the preset duration (for example, within 10 seconds), the AP processor determines that the device is offline, and cancels the trust relationship between the devices. If there is a transmission requirement subsequently, discovery and connection need to be performed again. However, that the device does not reply with the message within the preset duration may be caused by screen-off, a packet loss, another service being performed, or the like, and there is no data transmission requirement. In these cases, it is definitely inappropriate to cancel the trust relationship between the devices.

However, in this embodiment of this application, the AP processor does not need to repeatedly perform complex offline monitoring to determine whether the device is offline, but may enter the sleep state, and hand over a related online/offline monitoring task to the low-power-consumption SH chip. Then, the SH chip determines, by determining whether the preset condition for determining that the device is offline/online is met, whether the device is offline or online. If it is determined that the device is offline, it is determined, at the SH device layer, that the device is offline. Only when determining that the device is online or offline, the SH chip wakes up the AP processor to perform connection authentication on the discovered device or cancel the trust relationship with the offline device. In this way, power consumption of the AP processor can be reduced. In addition, an early connection can be implemented through early discovery in a background, so that a user can perform direct transmission during use.

Technology 4: Window alignment strategy.

A main idea of the technology 4 is described below. First, devices on a network trigger master (Master) device election on the network. Then, an SH chip of the master device determined through selection broadcasts a clock (namely, a hardware clock), a broadcast strategy, a scanning strategy, and the like of the SH chip. The broadcast strategy is, for example, a broadcast type and a broadcast parameter corresponding to the broadcast type. The scanning strategy is, for example, a scanning type and a scanning parameter corresponding to the scanning type.

Correspondingly, an SH chip of a slave (Slave) device on the network adjusts a clock of the SH chip, namely, a hardware clock, to synchronize with the hardware clock of the master device. An SH chip of the slave device indicates the AP processor to adjust an AP clock (also referred to as a software clock) based on a clock offset between the AP processor and the SH chip, to synchronize with an AP clock of the master device. Finally, the AP processor of the slave device synchronizes a re-determined broadcast parameter and scanning parameter to the SH chip after the AP clock and the hardware clock are adjusted, so that the SH chip can scan a broadcast message in a scanning window aligned with a broadcast window of the master device, and send the broadcast message in a broadcast window aligned with a scanning window of the master device.

According to the foregoing technology 4, the broadcast window of the device is aligned with the scanning window of the peer device by dynamically adjusting the broadcast parameter, or the scanning window of the device is aligned with the broadcast window of the peer device by dynamically adjusting the scanning parameter, so that a hit rate (also referred to as an arrival rate) of the broadcast message can be increased, and a keepalive effect is significantly improved. Therefore, device discovery and keepalive performance can be improved.

Technology 5: Establish a fast Bluetooth low energy (Bluetooth low energy, BLE) connection when there are a large quantity of devices on a network.

A main idea of the technology 5 is described below. A master device initiates the fast BLE connection to a slave device when there are a large quantity of online devices (for example, an upper limit is reached) on the network.

Establishment of the fast BLE connection between the master device and the slave device is triggered when there are a large quantity of online devices on the network. This can avoid problems such as a broadcast storm existing in broadcast and a bidirectional conflict existing in a BR Bluetooth connection, and can increase a communication speed on the network and allow another device to continue to join the network.

It should be noted that the inter-device connection management method provided in embodiments of this application may include one or more of the foregoing technology 1 to technology 5.

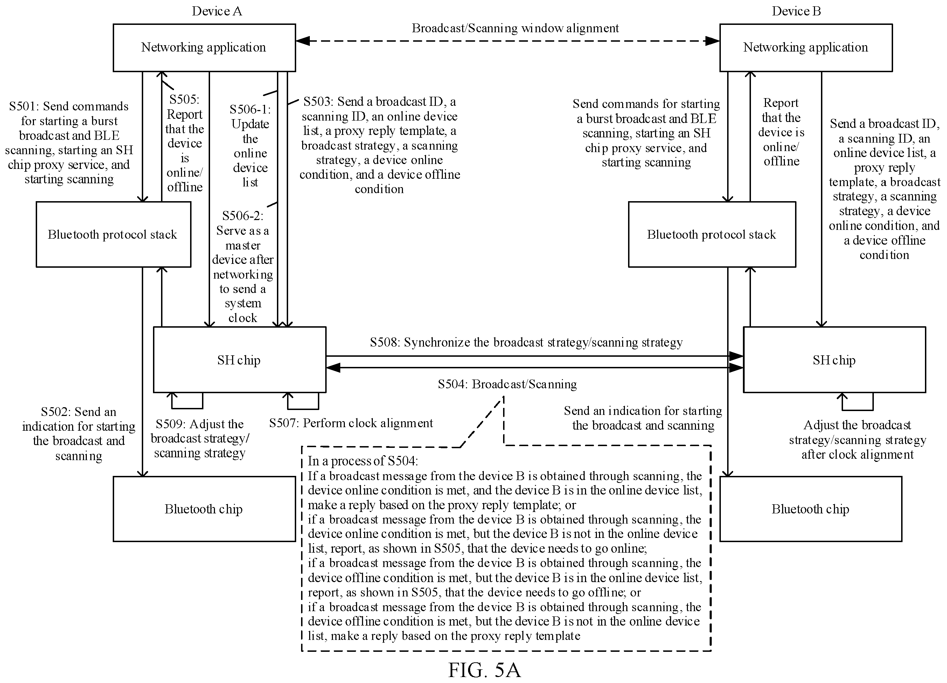

For example, refer to FIG. 5A. FIG. 5A shows interaction in an inter-device connection management process according to an embodiment of this application by using, as an example, a scenario in which a network includes a device A and a device B, and the device A continuously interacts with the device B to keep alive after discovering the device B through scanning.

For example, after a networking application of the device A is woken up, as shown in S501 in FIG. 5A, the networking application may send, to a Bluetooth protocol stack, commands for starting a burst broadcast and BLE scanning, starting an SH chip proxy service, and starting scanning. Further, as shown in S502 in FIG. 5A, the Bluetooth protocol stack sends, to a Bluetooth chip based on an indication of the application, an indication for starting the broadcast and scanning. In addition, as shown in S503 in FIG. 5A, the Bluetooth protocol stack sends, to an SH chip based on the indication of the application, a broadcast ID for uniquely identifying the started broadcast, a scanning ID for uniquely identifying the started scanning, an online device list, a proxy reply template, a broadcast strategy, and a scanning strategy. Then, as shown in S504 in FIG. 5A, the SH chip serves as a proxy of the AP processor to perform broadcast/scanning.

A preset condition for determining that a device is offline/online is set in the SH chip of the device A, and the online device list is stored in the SH chip of the device A. In a process in which the SH chip serves as the proxy of the AP processor to perform broadcast/scanning, if the SH chip of the device A detects, through scanning, that a broadcast message from the device B meets a device online condition, and the device B is in the online device list, the SH chip makes a reply based on the proxy reply template to perform keepalive. Alternatively, if the SH chip of the device A detects, through scanning, that a broadcast message from the device B meets a device online condition, but the device B is not in the online device list, the SH chip performs S505 to report that the device needs to go online. Alternatively, if the SH chip of the device A detects, through scanning, that a broadcast message from the device B meets a device offline condition, and the device B is in the online device list, the SH chip performs S505 to report that the device needs to go offline. Alternatively, if the SH chip of device A detects, through scanning, that a broadcast message from the device B meets a device offline condition, but the device B is not in the online device list, the SH chip makes a reply based on the proxy reply template.

For example, when receiving device online/offline reported by the SH chip, the upper-layer networking application of the device A may update the online device list based on the reported device online/offline, and synchronize an updated online device list to the SH chip, so that the updated online device list is used in a subsequent process of performing device discovery and keepalive work by the SH chip as a proxy.

It is assumed that the device A is a master device on a network, and the upper-layer application of the device A receives the device online reported by the SH chip. As shown in S506-1 in FIG. 5A, the upper-layer application of the device A updates the online device list; and as shown in S506-2 in FIG. 5A, after networking, the device A serves as the master device to trigger the networking application to send a system clock to the SH chip. Further, as shown in S507 in FIG. 5A, the SH chip aligns clocks, and synchronizes a hardware clock, the broadcast strategy, and the scanning strategy to the device B (as shown in S508 in FIG. 5A). As shown in FIG. 5A, the device B may implement clock alignment with the device A (for example, aligning the hardware clock and the system clock) based on the hardware clock, the broadcast strategy, and the scanning strategy from the device A, to implement alignment with a broadcast window/scanning window of the device A.

Optionally, after the broadcast window/scanning window of the device B is aligned with that of the device A, as shown in S509 in FIG. 5A, the device A may further adjust the broadcast window/scanning window, to obtain a more accurate window alignment effect.

Correspondingly, as shown in FIG. 5A, the device B performs broadcast/scanning, an SH chip proxy, a device online/offline report, clock synchronization, broadcast window/scanning window synchronization, and the like by using a same process as the device A.

Further, optionally, if there are a large quantity of online devices (for example, an upper limit is reached) on the network, the device A may initiate a fast BLE connection to a slave device (for example, the device B).

In the example of the inter-device connection management process shown in FIG. 5A, both the device A and the device B perform device discovery according to the unidirectional declarative discovery strategy (namely, the technology 1). The preset condition for determining that a device is offline/online is set in the SH chip of each of the device A and the device B. The SH chip may serve as a proxy of an upper layer to perform device discovery and keepalive work, and report device online/offline to the upper layer when discovering the device online/offline (namely, the technology 3). The upper layer of each of the device A and the device B maintains the real-time and reliable online device list, and may update the online device list based on the device online/offline discovered in a process in which the SH chip serves as the proxy to perform device discovery and keepalive work (namely, the technology 2). In addition, when a new device (for example, the device B) accesses a network, the device A serving as the master device may synchronize clock information to the new device, so that the new device can align clocks with the master device, and further align broadcast windows/scanning windows (namely, the technology 4). In addition, communication between devices on the network shown in FIG. 5A is implemented through the BLE connection (namely, the technology 5).

It can be learned that the foregoing technology 1, technology 2, technology 3, technology 4, and technology 5 are used in the example of the inter-device connection management process shown in FIG. 5A. Therefore, according to the inter-device connection management method shown in FIG. 5A, a delay during device discovery can be reduced, communication resources and device power consumption are reduced, a broadcast storm can be avoided, interference between devices can be avoided, a device discovery success rate can be increased, a keepalive effect can be improved, and device discovery and keepalive performance can be improved.

In addition, according to the keepalive strategy with low power consumption and high performance provided in this embodiment of this application, if another application wakes up the AP processor to perform another discovery and connection service, the SH chip may perform conflict avoidance on a task of the AP processor by monitoring a status of a protocol stack.

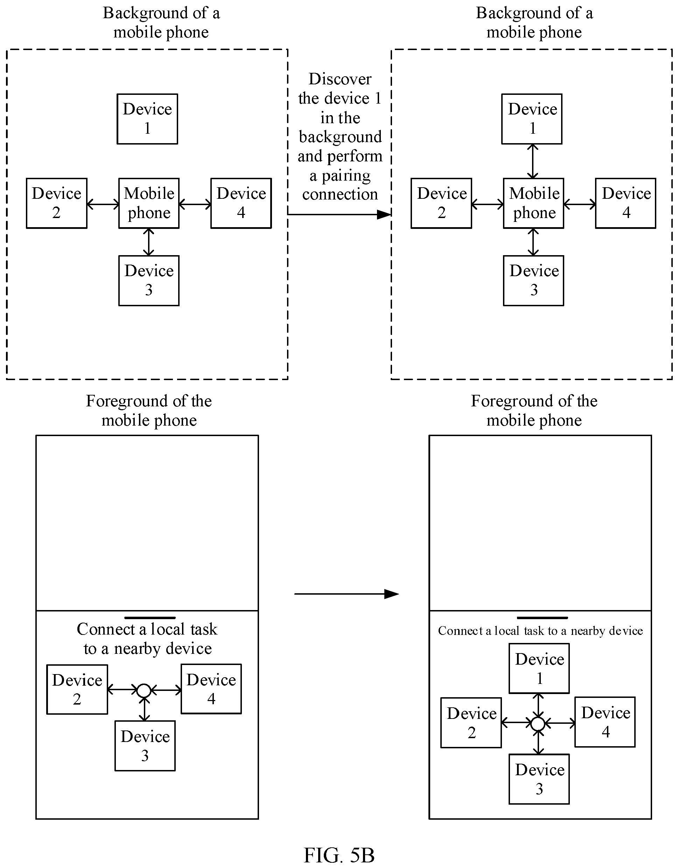

In addition, an early connection can be implemented through early discovery in the background, so that the user can perform direct transmission during use (for example, perform transmission immediately after a service enters a foreground interface). For example, as shown in FIG. 5B, a mobile phone may perform connection authentication with a device 1 in advance in the background. In this way, when the user expects to perform an operation like task continuation, the device 1 is displayed on a HyperTerminal interface or a slide-up widget on which a surrounding available device list is displayed in real time shown in FIG. 5B, so that the user can quickly select a target device.

With reference to specific Embodiment 1 to Embodiment 5, the following separately describes in detail an inter-device connection management method based on the foregoing technology 1 to technology 5.

### Embodiment 1

In an inter-device connection management method provided in Embodiment 1, device discovery is mainly implemented according to a unidirectional declarative discovery strategy.

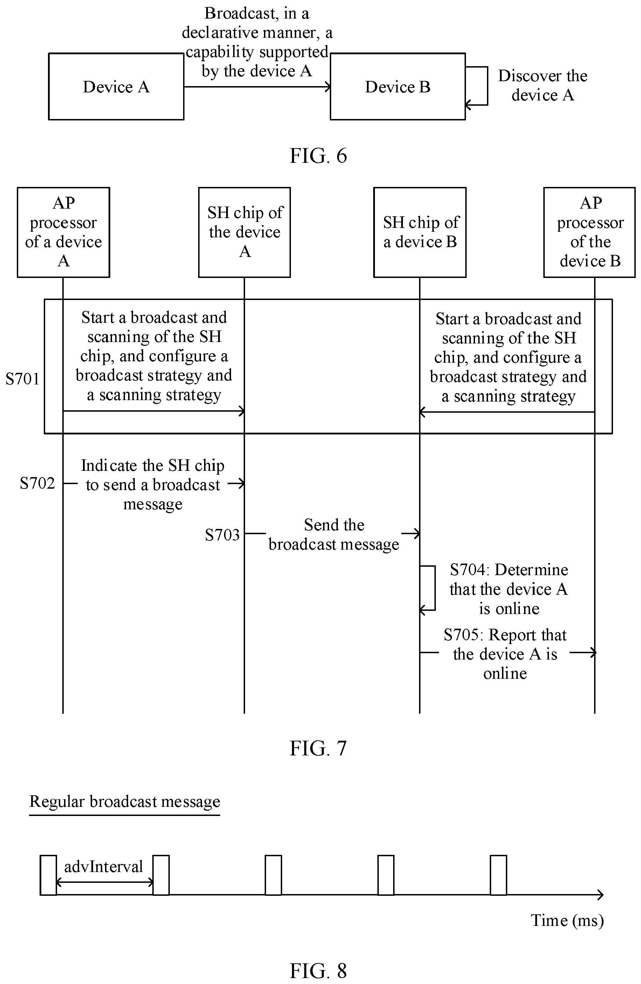

For example, FIG. 6 is a diagram of a device discovery process according to the unidirectional declarative discovery strategy according to this embodiment of this application. As shown in FIG. 6, a device A broadcasts, to a peripheral device (including a device B) in a declarative manner, a capability supported by the device A. When the device B obtains a broadcast message through scanning, it is considered that the device A is online. In this way, the device B can successfully discover the device A through unidirectional broadcast.

In an example, FIG. 7 is a diagram of a device discovery process according to an embodiment of this application. As shown in FIG. 7, the device discovery process provided in this embodiment of this application may mainly include S701 to S705.

S701: An AP processor of a device A and an AP processor of a device B separately start a broadcast and scanning of an SH chip, and configure a broadcast strategy and a scanning strategy.

The broadcast strategy may include but is not limited to a broadcast type, a broadcast parameter corresponding to the broadcast type, and the like. The scanning strategy may include but is not limited to a scanning type, a scanning parameter corresponding to the scanning type, and the like.

For example, the broadcast type may include but is not limited to a regular broadcast (also referred to as a common broadcast) or a burst (burst) broadcast. The regular broadcast is, for example, a BLE broadcast (also referred to as an alwaysOn broadcast).

For example, FIG. 8 is a diagram of a sending strategy of a regular broadcast message according to an embodiment of this application. As shown in FIG. 8, the regular broadcast message is sent based on a packet sending interval (advInterval). To be specific, a device sends the broadcast message once at an interval of duration corresponding to a broadcast interval.

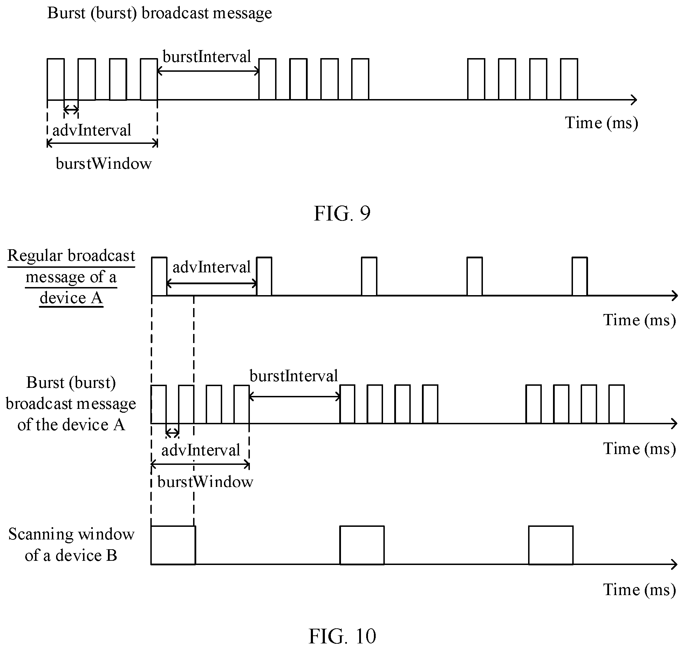

In addition, for example, FIG. 9 is a diagram of a sending strategy of a burst (burst) broadcast message according to an embodiment of this application. As shown in FIG. 9, the burst (burst) broadcast message is sent based on three broadcast parameters. The three broadcast parameters are respectively a packet sending interval (advInterval), a packet sending window (burstWindow), and a broadcast interval (burstInterval).

It may be understood that for the burst (burst) broadcast, a cluster of broadcast sets at a high frequency in burstWindow may be periodically sent. The burst (burst) broadcast may be considered as a cluster-like BLE periodic broadcast. For the burst (burst) broadcast, the broadcast set is periodically sent at a high frequency, so that a device discovery success rate can be greatly increased, and further, a device discovery result with high performance and high reliability is obtained. In addition, because the burst (burst) broadcast is sent by a low-power-consumption SH chip, the low-power-consumption broadcast is sent.

For example, as shown in FIG. 10, if the device A sends the regular broadcast message shown in FIG. 10, the device B can obtain only one broadcast message through scanning in one scanning window. If the device A sends the burst (burst) broadcast message shown in FIG. 10, the device B can obtain two broadcast messages through scanning in one scanning window. Therefore, compared with the regular broadcast, the burst (burst) broadcast can be used to greatly increase the device discovery success rate.

In addition, a Bluetooth chip does not need to be re-enabled when the burst (burst) broadcast changes from a high-frequency state to an idle state. Therefore, the Bluetooth chip does not need to be restarted, so that consumption of Bluetooth resources can be reduced, and an upper-layer continuous service cannot be interrupted. For example, it is assumed that the Bluetooth chip is performing a BLE connection. If the Bluetooth chip needs to be re-enabled when the broadcast message changes from a high-frequency state to an idle state, the BLE connection fails.

In this embodiment of this application, a bottom layer (for example, the Bluetooth chip or a Wi-Fi chip) of the device A may further return an identification (identification, ID) to an application layer by layer after starting a broadcast based on an indication of the AP processor. The ID uniquely identifies the started broadcast. The application may set different broadcast parameters for the broadcast with the ID via the AP processor, to implement broadcast type switching, scanning parameter modification, and the like. For example, if only advInterval is set for the broadcast with the ID, it indicates that a broadcast type of the broadcast is the regular broadcast. If the three broadcast parameters advInterval, burstWindow, and burstInterval are set for the broadcast with the ID, it indicates that a broadcast type of the broadcast is the burst (burst) broadcast.

S702: The AP processor of the device A indicates the SH chip to send a broadcast message.

S703: The SH chip of the device A sends the broadcast message.

In some embodiments, the declarative broadcast sent by the device A to the peripheral device (including the device B) may be the regular broadcast message (also referred to as a common broadcast message).

Optionally, in some other embodiments, the declarative broadcast sent by the device A to the peripheral device (including the device B) may be the burst (burst) broadcast.

Alternatively, optionally, in some other embodiments, the device A may switch a type of the broadcast message sent to the peripheral device (including the device B). For example, the device A may send the burst (burst) broadcast message in a period of time, and send the regular broadcast message in another period of time.

In a possible implementation, the device A may switch a type of the broadcast message based on a screen status of the device A. The screen status is, for example, a screen-on state or a screen-off state. For example, the device A may send the burst (burst) broadcast message when a screen of the device A is in the screen-on state, and switch to sending the regular broadcast message when the screen of the device A is in the screen-off state.

In a possible implementation, the device A may switch a type of the broadcast message based on a quantity of devices around the device A. For example, the device A may send the burst (burst) broadcast message when the quantity of devices around the device A is less than or equal to a preset value (for example, 20), and switch to sending the regular broadcast message when the quantity of devices around the device A is greater than the preset value. For example, the device around the device A may be an online device around the device A, or a device scanned by the device A.

In another possible implementation, the device A may switch a type of the broadcast message based on accumulated foreground running duration in the device discovery process. For example, the device A may send the burst (burst) broadcast message when the accumulated foreground running duration in the device discovery process does not exceed preset duration (for example, 5 seconds), and switch to sending the regular broadcast message when the device discovers that the accumulated foreground running duration in the device discovery process exceeds the preset duration (for example, 5 seconds).

The type of the broadcast message is switched, so that dense broadcast messages of a single device do not fully occupy the scanning window, and arrival of a broadcast message from another device is not affected.

It should be noted that the foregoing bases for switching the type of the broadcast message are merely used as examples, and the device may alternatively switch the type of the broadcast message based on other related information. This is not limited in embodiments of this application.

For example, in this embodiment of this application, the device may send the broadcast message through a fixed broadcast channel (for example, a channel 37, a channel 38, or a channel 39).

S704: When obtaining the broadcast message from the device A through scanning, the SH chip of the device B determines that the device A is online.

For example, in this embodiment of this application, the device may scan the broadcast message through the fixed broadcast channel (for example, the channel 37, the channel 38, or the channel 39).

S705: The SH chip of the device B reports, to the AP processor of the device B, that the device A is online.

The SH chip of the device B reports, to the AP processor of the device B, that the device A is online, so that the AP processor of the device B performs subsequent processing to perform connection authentication with the device A.

An inter-device connection authentication (Paring) process includes processes such as capability exchange, device authentication, key generation, connection encryption, and confidential information distribution. An objective of pairing is to implement connection encryption, device authentication, and key generation. Once pairing between devices is successful, a Bluetooth configuration menu of a device includes a device with which the device is paired. For example, a key is a long-term key (long-term key, LTK). The LTK may be used by both pairing parties to store the LTK, so that a pairing procedure can be skipped based on the LTK in a next device reconnection authentication process.

In a possible implementation, the device B may generate a key, allocate the key to the device A through a data channel (for example, a channel 0 to a channel 36), and is bound (Bind) to the device A. In a process in which the device B is bound to the device A, the device B and the device A store address information (for example, a media access control (media access control, MAC) address and a resolving key (identity resolving key, IRK)) of each other, and the like. For a specific process of device connection authentication, refer to the conventional technology. Details are not described herein.

Optionally, in this embodiment of this application, a communication connection established between the devices after discovery may be a BLE connection.

For example, the BLE connection may be established between the devices in the following three phases: a BLE service discovery phase, a connection establishment phase, and an MTU exchange phase. The BLE service discovery phase is most time-consuming.

It can be learned from FIG. 6 and FIG. 7 that, compared with a conventional inquiry-based device discovery strategy, the unidirectional declarative device discovery strategy provided in Embodiment 1 of this application can be used to reduce half of time for device discovery. Therefore, a delay during device discovery can be greatly reduced, and device power consumption can be reduced. In addition, because successful device discovery can be implemented after unidirectional communication between the device A and the device B, communication resources can be greatly reduced.

Particularly, in a scenario in which there is a multi-device discovery and connection networking requirement, according to the unidirectional declarative device discovery strategy provided in Embodiment 1 of this application, the delay during device discovery can be greatly reduced, device power consumption can be reduced, a broadcast storm can be avoided, interference between devices can be avoided, and a device discovery success rate can be increased.

### Embodiment 2

In an inter-device connection management method provided in Embodiment 2, a trust relationship on a network is maintained mainly by using an SH chip as a proxy of an AP processor to maintain a real-time and reliable online device list. The SH chip wakes up the AP processor to establish a connection to a scanned device only when the SH chip discovers that the scanned device is not on the network, so that the scanned device is online.

In Embodiment 2 of this application, the device has a capability of updating the online device list (also referred to as a connected device list). For example, when networking is started (for example, when the device is powered on), a networking application starts a broadcast and scanning of a low-power-consumption SH chip by using the AP processor, and configures the online device list, a proxy reply template, a broadcast strategy, a scanning strategy, and the like. Then, regardless of a working state (including a wakeup state or a sleep state) of the AP processor and a screen status (including a screen-on state or a screen-off state) of the device, the SH chip may always serve as the proxy of the AP processor to perform device discovery and keepalive work until a new device is scanned. In a process in which the SH chip serves as the proxy of the AP processor to perform device discovery and keepalive work, the SH chip may interact with another device by using a broadcast message. When the SH chip obtains a broadcast message from a device through scanning, if the device is in the online device list, the SH chip may reply to the broadcast message based on the proxy reply template, to maintain a communication connection between devices; or if the device is not in the online device list, the SH chip may wake up the AP processor to perform device connection authentication. Further, after the AP processor completes connection authentication on the device, the AP processor updates the device to the online device list.

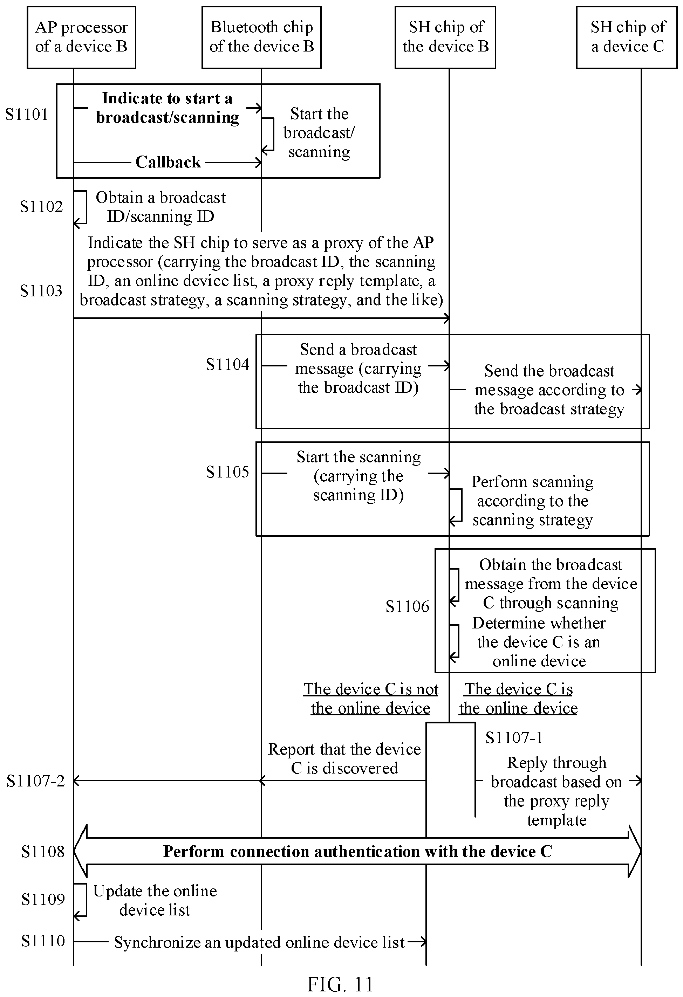

In an example, FIG. 11 is a diagram of a device discovery and keepalive process according to an embodiment of this application by using an example in which a broadcast message is a Bluetooth broadcast message. As shown in FIG. 11, the device discovery and keepalive process provided in this embodiment of this application may mainly include S1101 to S1110.

S1101: An AP processor of a device B indicates a Bluetooth chip to start a broadcast/scanning, and receives a callback after the Bluetooth chip starts the broadcast/scanning.

The callback is used to notify the AP processor that the Bluetooth chip starts the broadcast/scanning.

S1102: The AP processor of the device B obtains a broadcast ID/scanning ID.

The broadcast ID/scanning ID uniquely identifies the broadcast/scanning that has been started by the Bluetooth chip.

In an example, the broadcast ID/scanning ID may be a broadcast ID/scanning ID corresponding to the started broadcast/scanning that is reported by the Bluetooth chip to the AP processor of the device B layer by layer.

S1103: The AP processor of the device B indicates an SH chip to serve as a proxy of the AP processor.

When indicating the SH chip to serve as the proxy of the AP processor, the AP processor of the device B may carry the broadcast ID, the scanning ID, the online device list, the proxy reply template, the broadcast strategy, the scanning strategy, and the like to an indication message.

The online device list includes information about a device that has established a connection to the device. For example, Embodiment 2 is performed based on the solution provided in Embodiment 1. After the device B obtains a unidirectional declarative broadcast from a device A through scanning, the device B updates the online device list, where an updated online device list includes information about the device A that is discovered by the device B and connected to the device B in Embodiment 1.

The proxy reply template is an automatic reply template preset by the AP processor.

The broadcast strategy includes, for example, a broadcast type and a broadcast parameter corresponding to the broadcast type. For example, the broadcast type is a regular broadcast, and a broadcast parameter corresponding to the regular broadcast is advInterval. Alternatively, for example, the broadcast type is a burst broadcast, and broadcast parameters corresponding to the burst broadcast are advInterval, burstWindow, and burstInterval.

The scanning strategy includes a scanning type and a scanning parameter corresponding to the scanning type. For example, the scanning parameter may include a scanning window, a scanning filtering condition, and the like.

For example, the scanning filtering condition is a broadcast that needs to be filtered (namely, ignored) during scanning, for example, a broadcast message sent by a vendor device with a universally unique identifier (universally unique identifier, UUID), or a broadcast message sent by a device with an ID. For example, the scanning filtering condition may be represented by a whitelist or a blacklist. The whitelist includes a UUID of a vendor, a device ID, and the like that do not need to be filtered during scanning, and the blacklist includes a UUID of a vendor, a device ID, and the like that need to be filtered during scanning.

S1104: When receiving a broadcast message from the Bluetooth chip of the device B, the SH chip of the device B sends the broadcast message according to the broadcast strategy.

The broadcast message from the Bluetooth chip of the device B carries the broadcast ID, and the SH chip of the device B may serve, based on the broadcast ID, as the proxy of the AP processor to execute a corresponding broadcast proxy service.

In an example, the SH chip of the device B may send the corresponding broadcast message based on the broadcast type and the corresponding broadcast parameter that are indicated by the broadcast strategy.

For example, the broadcast type is the regular broadcast, and advInterval is 20 milliseconds (ms). The SH chip of the device B may continuously send the regular broadcast at an interval of 20 ms. Alternatively, for example, the broadcast type is the burst broadcast, burstInterval is 20 ms, burstWindow is 7 ms, and advInterval is 1 ms. The SH chip of the device B may continuously send the broadcast message at an interval of 1 ms in the 7 ms sending window based on a period of 20 ms.

S1105: When receiving a scanning startup indication from the Bluetooth chip of the device B, the SH chip of the device B performs scanning according to the scanning strategy.

The scanning startup indication from the Bluetooth chip of the device B carries the scanning ID, and the SH chip of the device B may serve, based on the scanning ID, as the proxy of the AP processor to execute a corresponding scanning service.

In an example, the SH chip of the device B may determine the scanning window based on the scanning parameter indicated by the scanning strategy, and then perform scanning in the scanning window to discover another device.

S1106: When obtaining a broadcast message from a device C through scanning, the SH chip of the device B determines whether the device C is an online device.

For example, the SH chip of the device B may determine, by determining whether the device C is in the online device list, whether the device C is the online device.

If the SH chip of the device B determines that the device C is in the online device list, that is, determines that the device C is the online device, the SH chip performs S1107-1, that is, replies to the device C through broadcast based on the proxy reply template, to maintain a communication connection between the device B and the device C. If the SH chip of the device B determines that the device C is not in the online device list, that is, determines that the device C is not the online device, the SH chip performs S1107-2, that is, report the discovery event to the AP processor. Further, the AP processor performs S1108 and S1109.

S1107-1: The SH chip of the device B replies to the device C through broadcast based on the proxy reply template.

S1107-2: The SH chip of the device B reports, to the AP processor, that the device C is discovered.

S1108: The AP processor of the device B performs connection authentication with the device C.

S1109: The AP processor of the device B updates the online device list.

For example, after performing connection authentication with the device C, the AP processor of the device B updates the device C to the online device list. An updated online device list includes information about the device C, for example, an ID of the device C and a capability supported by the device C.

Optionally, in this embodiment of this application, the AP processor of the device B may further regularly and periodically update the online device list, to ensure the real-time and reliable online device list.

S1110: The AP processor of the device B synchronizes the updated online device list to the SH chip.

Then, the SH chip of the device B continues to serve as the proxy of the AP processor to perform device discovery and keepalive work until a new device is scanned.

It should be noted that, in this embodiment of this application, the AP processor of the device may indicate the SH chip to serve as the proxy of the device to perform device discovery and keepalive work, or may reclaim proxy permission of the SH chip.

In a possible implementation, the AP processor of the device may reclaim the proxy permission of the SH chip for broadcast/scanning by sending a proxy permission reclaim command to the SH chip. The command carries the broadcast ID/scanning ID.

In another possible implementation, the AP processor of the device may reclaim the proxy permission of the SH chip for broadcast/scanning by destroying the broadcast ID/scanning ID.

In addition, in this embodiment of this application, in a process in which the SH chip serves as the proxy of the device B to perform device discovery and keepalive work, the AP processor of the device B may adjust the broadcast strategy (for example, the broadcast type and the broadcast parameter corresponding to the broadcast type) and/or the scanning strategy (for example, the scanning parameter) based on an actual requirement by using the broadcast ID as an identifier, and synchronize the adjustment to the SH chip.

Optionally, Embodiment 2 of this application may be combined with Embodiment 1 to be used in an inter-device connection management process.

For example, the online device list includes the information about the device that has established the connection to the device. For example, Embodiment 2 is performed based on the solution provided in Embodiment 1. It is assumed that the device B performs device connection and keepalive according to the method in Embodiment 2, and the AP processor of the device A performs unidirectional declarative broadcast according to the method in Embodiment 1. After the SH chip of the device B obtains the unidirectional declarative broadcast from the device A through scanning, the SH chip of the device B determines whether the device A is in the online device list. If the device A is in the online device list, the SH chip of the device B does not need to wake up the AP processor, but replies to the device A through broadcast based on the proxy reply template. If the device A is not in the online device list, the SH chip of the device B reports, to the AP processor, that the device A is discovered, and the AP processor of the device B performs connection authentication with the device A and updates the online device list. The updated online device list includes information about the device A.

It may be understood that, in a conventional device discovery technology, because the AP processor is always responsible for device discovery and connection and the like, the AP processor is usually in a high power consumption state. Especially in a scenario in which there is a multi-device discovery and connection networking requirement, the AP processor is always in the high power consumption state. In addition, a large quantity of invalid broadcasts further cause a broadcast storm, and quick consumption of hardware resources leads to no resource available for normal discovery, connection, and transmission. In addition, in the conventional device discovery technology, once one end does not reply to a message within a timeout period (for example, more than 10 seconds), a trust relationship between devices is cancelled. If there is a transmission requirement, discovery and connection need to be performed again. Therefore, based on the conventional device discovery technology, the connection between devices is usually disconnected when a message is not replied to within a timeout period due to a special reason like screen-off, a packet loss, or another service being performed, and device discovery needs to be performed again when there is a data transmission requirement again. It can be learned that the conventional device discovery technology does not have an appropriate and effective keepalive mechanism.

However, in Embodiment 2 of this application, the device maintains the real-time and reliable online device list, so that when there is no newly discovered device, the SH chip can serve as the proxy of the AP processor to perform device discovery and keepalive work, and the devices between which the communication connection has been established can maintain the trust relationship at the low-power-consumption SH chip layer. In this way, power consumption of the AP processor can be greatly reduced.

In addition, compared with the conventional device discovery technology, a keepalive strategy with low power consumption and high performance provided in Embodiment 2 of this application can resolve a problem of slow networking caused by re-establishing the trust relationship due to frequent online and offline and a problem of a networking failure caused by single-end offline due to delayed interaction.

In addition, an early connection can be implemented through early discovery in the background, so that the user can perform direct transmission during use (for example, perform transmission immediately after a service enters a foreground interface).

In addition, according to the keepalive strategy with low power consumption and high performance provided in Embodiment 2 of this application, if another application wakes up the AP processor to perform another discovery and connection service, the SH chip may perform conflict avoidance on a task of the AP processor by monitoring a status of a protocol stack. For example, it is assumed that the AP processor is performing a BR Bluetooth audio connection task. The SH chip actively performs temporary delay avoidance after monitoring a status of a Bluetooth protocol stack.

### Embodiment 3

In an inter-device connection management method provided in Embodiment 3, a device offline condition for determining that a device is offline and a device online condition for determining that the device is online are mainly set in an SH chip. In a process in which the SH chip serves as a proxy of an AP processor to perform device discovery and keepalive work, it is determined, based on the specified device offline condition, whether the device is offline, and determined, based on the specified device online condition, whether the device is online.

For example, a connection between devices is a Bluetooth connection. In a possible implementation, in Embodiment 3 of this application, an onLost mode/onFound mode of a Bluetooth protocol stack may be used to determine whether the device is offline/online. The onFound mode is also referred to as an onFirst mode.

For example, the device offline condition in the onLost mode is: receiving no valid broadcast message from the device within preset duration (for example, first preset duration), or receiving no valid broadcast message of a preset quantity (for example, a first preset quantity) from a same device within preset duration (for example, first preset duration). The valid broadcast message is a broadcast message whose signal strength is greater than a preset signal strength threshold. The preset signal strength threshold is, for example, -78 dBm.

For example, the device online condition in the onFound mode is: receiving a valid broadcast message from the device, or obtaining, through scanning from the same device within preset duration (for example, second preset duration), a valid broadcast message whose quantity is greater than the preset quantity.

Optionally, the first preset duration is the same as the second preset duration. Alternatively, optionally, the first preset duration is different from the second preset duration.

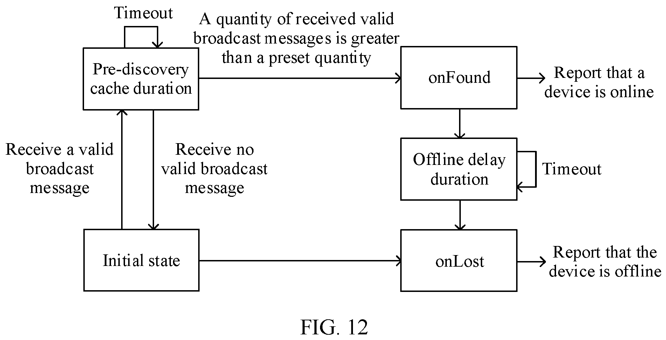

FIG. 12 is a logic diagram of determining an OnFound mode/OnLost mode according to Embodiment 3 of this application. As shown in FIG. 12, in an initial state (initstate), if the SH chip receives a valid broadcast message (for example, rssi>rssi_high_thresh) that meets a scanning filtering condition (filter_k_match), the SH chip may monitor a status of a broadcast message obtained through scanning within pre-found cache duration (pre-found linger) (namely, the second preset duration). If a quantity of broadcast messages that meet the condition and that are obtained by the SH chip through scanning within a pre-found cache duration is greater than a second preset quantity (match_cnt≥onfound_timeout_cnt), the SH chip determines that the device is in the onFound mode, and the SH chip reports, to the AP, that the device is online (for example, reports onFound).

Alternatively, as shown in FIG. 12, if a quantity of broadcast messages that meet the condition and that are obtained by the SH chip through scanning within pre-found cache duration (pre-found linger) (namely, the first preset duration) is less than a preset quantity (namely, the first preset quantity), the SH chip determines that the device is in the onLost mode, and the SH chip reports, to the AP, that the device is offline (for example, reports onLost).

Optionally, as shown in FIG. 12, after the SH chip discovers onFound, if the SH chip does not obtain the broadcast message again through scanning within offline delay duration (post found linger), the SH chip determines that the device is in the onLost mode, and the SH chip reports, to the AP, that the device is offline (for example, reports onLost).

In an example, for descriptions of SH parameters in the onLost mode/onFound mode that include parameters such as onfound_timeout, onfound_timeout_cnt, onlost_timeout, rssi_low_thresh and rssi_high_thresh, refer to the following Table 1.

**Table 1**

| SH parameters | Description |
|---|---|
| onfound_timeout | Duration for the SH chip to stay and scan another broadcast message before reporting onFound |
| onfound_timeout_cnt | If the SH chip scans another broadcast message within onfound_timeoutduration, the SH chip simultaneously collects a quantity of broadcast messages that meet a preset condition (for example, the device online condition) within the onfound_timeout duration. If the quantity of broadcast messages exceeds onfound_timeout_cnt, the SH chip reports onFound. |
| onlost_timeout | After the SH chip obtains a broadcast message through scanning, if the SH chip does not obtain the broadcast message through scanning again within the lost_timeout duration, the SH chip reports onLost. |
| rssi_low_thresh | If the SH chip obtains, through scanning, a broadcast message whose RSSI is lower than rssi_low_thresh, it is considered that the broadcast message is not scanned. |
| rssi_high_thresh | If the SH chip obtains, through scanning, a broadcast message whose RSSI is higher than rssi_high_thresh, it is considered that the broadcast message is scanned. |

Optionally, Embodiment 3 of this application may be combined with Embodiment 1 and/or Embodiment 2 to be used in an inter-device connection management process.

For example, Embodiment 3 is performed based on the solution provided in Embodiment 1. It is assumed that the device B performs device offline/online management according to the method in Embodiment 3, and the AP processor of the device A performs unidirectional declarative broadcast according to the method in Embodiment 1. After the SH chip of the device B obtains, through scanning, a broadcast message that is from the device A and that meets the device online condition, the SH chip of the device B determines that the device A is online, and reports, to the AP processor of the device B, that the device A is online. For example, the device online condition is the broadcast message obtained through scanning is a valid broadcast message, or obtaining, through scanning within preset duration (for example, the second preset duration), a quantity of valid broadcast messages from the device A that is greater than a preset quantity.

Alternatively, after the SH chip of the device B obtains, through scanning, a broadcast message that is from the device A and that meets the device offline condition, the SH chip of the device B determines that the device A is offline, and reports, to the AP processor of the device B, that the device A is offline. For example, the device offline condition is: receiving no valid broadcast message from the device A within preset duration (for example, the first preset duration), or receiving no valid broadcast message of a preset quantity (for example, the first preset quantity) from the device A within preset duration (for example, the first preset duration).

For example, Embodiment 3 is performed based on the solution provided in Embodiment 2. It is assumed that the device B performs device offline/online management according to the method in Embodiment 3. After the SH chip of the device B obtains, through scanning, a broadcast message that is from the device A and that meets the device online condition, the SH chip of the device B determines whether the device A is in the online device list. If the device A is in the online device list, the SH chip of the device B replies to the device A through broadcast based on the proxy reply template. If the device A is not in the online device list, the SH chip of the device B reports, to the AP processor, that the device A is online, and the AP processor of the device B performs connection authentication with the device A and updates the online device list. An updated online device list includes information about the device A.

Alternatively, after the SH chip of the device B obtains, through scanning, a broadcast message that is from the device A and that meets the device offline condition, the SH chip of the device B determines whether the device A is in the online device list. If the device A is in the online device list, the SH chip of the device B reports, to the AP processor, that the device A is offline, and the AP processor of the device B cancels a trust relationship with the device A (for example, cancels pairing) and updates the online device list. An updated online device list does not include information about the device A.

For example, Embodiment 3 is performed based on the solutions provided in Embodiment 2 and Embodiment 1. It is assumed that the device B performs device offline/online management according to the method in Embodiment 3, and the AP processor of the device A performs unidirectional declarative broadcast according to the method in Embodiment 1. After the SH chip of the device A obtains, through scanning, a broadcast message that is from the device B and that meets the device online condition, the SH chip of the device B determines whether the device A is in the online device list. If the device A is in the online device list, the SH chip of the device B replies to the device A through broadcast based on the proxy reply template. If the device A is not in the online device list, the SH chip of the device B reports, to the AP processor, that the device A is discovered, and the AP processor of the device B performs connection authentication with the device A and updates the online device list. An updated online device list includes information about the device A.

Alternatively, after the SH chip of the device B obtains, through scanning, a broadcast message that is from the device A and that meets the device offline condition, the SH chip of the device B determines whether the device A is in the online device list. If the device A is in the online device list, the SH chip of the device B reports, to the AP processor, that the device A is offline, and the AP processor of the device B cancels a trust relationship with the device A and updates the online device list. An updated online device list does not include information about the device A.

It may be understood that, in the conventional device discovery technology, the AP processor is always responsible for controlling device discovery and connection and the like, and a strategy for determining that the device is offline is that when a threshold (for example, no reply message is received within preset duration) specified for a service is met, the AP processor determines that the device is offline, and cancels the trust relationship between devices. In this case, the AP processor needs to periodically poll whether the reply message is received. If no reply message is received within the preset duration (for example, within 10 seconds), the AP processor determines that the device is offline, and cancels the trust relationship between the devices. If there is a transmission requirement subsequently, discovery and connection need to be performed again. However, that the device does not reply with the message within the preset duration may be caused by screen-off, a packet loss, another service being performed, or the like, and there is a data transmission requirement. In these cases, it is definitely inappropriate to cancel the trust relationship between the devices.

However, in this embodiment of this application, the AP processor does not need to repeatedly perform complex offline monitoring to determine whether the device is offline, but may enter the sleep state, and hand over a related online/offline monitoring task to the low-power-consumption SH chip. Then, the SH chip determines, by determining whether the preset condition for determining that the device is offline/online is met, whether the device is offline or online. If it is determined that the device is offline, it is determined, at the SH device layer, that the device is offline. Only when determining that the device is online or offline, the SH chip wakes up the AP processor to perform connection authentication on the discovered device or cancel the trust relationship with the offline device (for example, cancel pairing). In this way, power consumption of the AP processor can be reduced.

In addition, an early connection can be implemented through early discovery in a background, so that a user can perform direct transmission during use.

In addition, compared with the conventional device discovery technology, a keepalive strategy with low power consumption and high performance provided in Embodiment 3 of this application can resolve a problem of slow networking caused by re-establishing the trust relationship due to frequent online and offline and a problem of a networking failure caused by single-end offline due to delayed interaction.

### Embodiment 4

In an inter-device connection management method provided in Embodiment 4, a master device on a network broadcasts information such as a hardware clock, a broadcast parameter, and a scanning parameter of the master device, and then a slave device adjusts a hardware clock and an AP clock of the slave device based on the foregoing information, so that the hardware clock and the AP clock of the slave device are respectively synchronized with the hardware clock and an AP clock of the master device. Further, the slave device adjusts the broadcast parameter based on an adjusted hardware clock and AP clock, and then an SH chip of the slave device may send a broadcast message in a broadcast window aligned with a scanning window of the master device; and adjusts the scanning parameter based on the adjusted hardware clock and AP clock, and then the SH chip of the slave device may scan the broadcast message in a scanning window aligned with a broadcast window of the master device.

In Embodiment 4 of this application, the master device on the network may be determined through election by devices on the network.

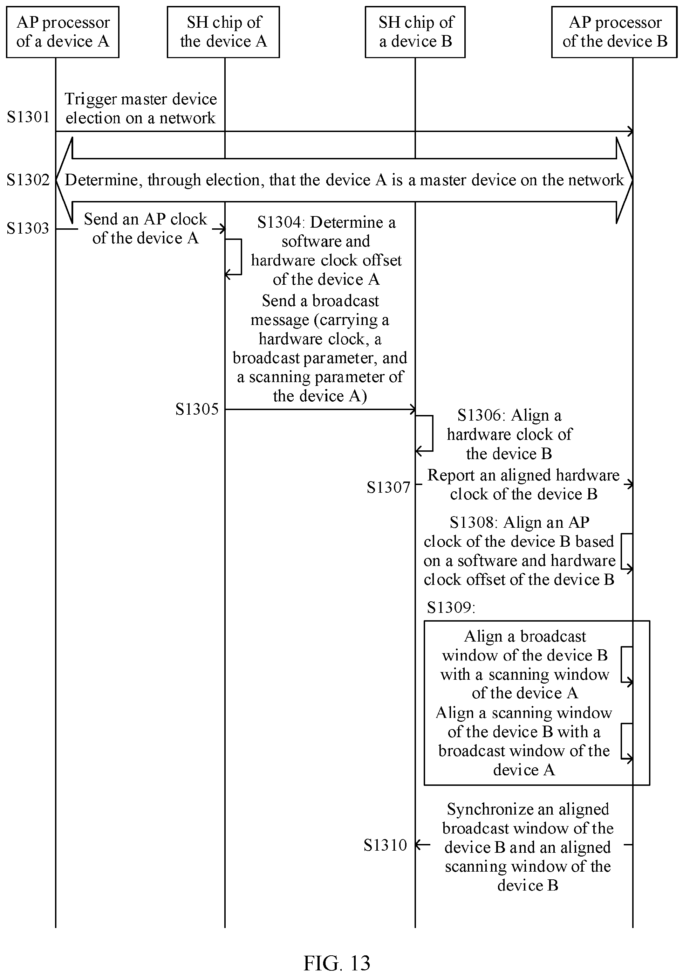

For example, FIG. 13 is a flowchart of a window alignment process according to an embodiment of this application by using an example in which a network includes a device A and a device B. As shown in FIG. 13, the device discovery process provided in this embodiment of this application may include S1301 to S1310.

S1301: An AP processor of the device A triggers master device election on the network.

For example, devices on the network may trigger master device election on the network in one or more of the following cases 1 to 3.

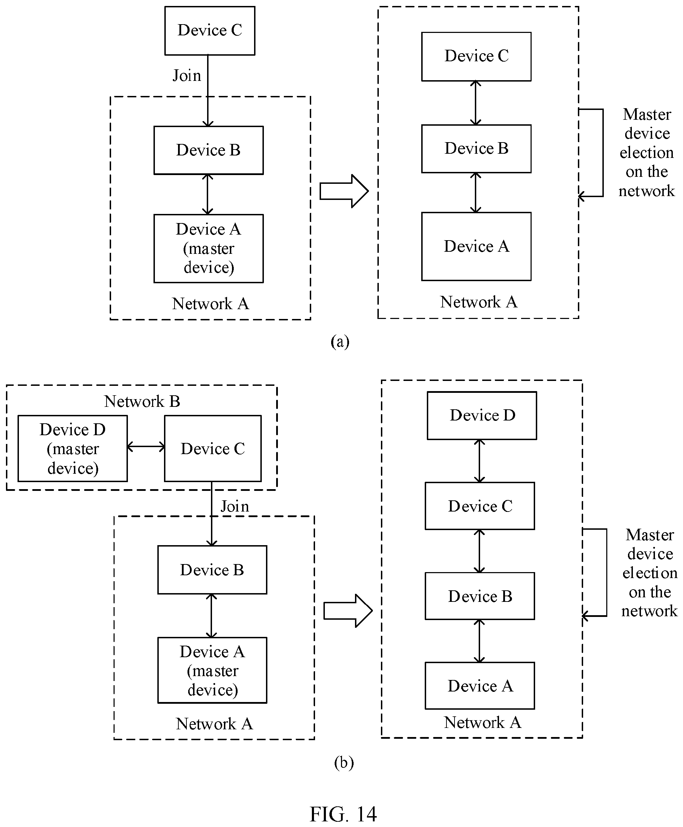

Case 1: A new device joins the network. As shown in (a) in FIG. 14, if a new device C joins a network A (the network A includes the device A and the device B, where the device A is a master device on the original network A), master device election on the network A is triggered. For another example, as shown in (b) in FIG. 14, if a device C on a network B (the network includes the device C and a device D, where the device D is an original master device on the original network B) joins a network A (the network A includes the device A and the device B, where the device A is a master device on the original network A), master device election on the network A is triggered.

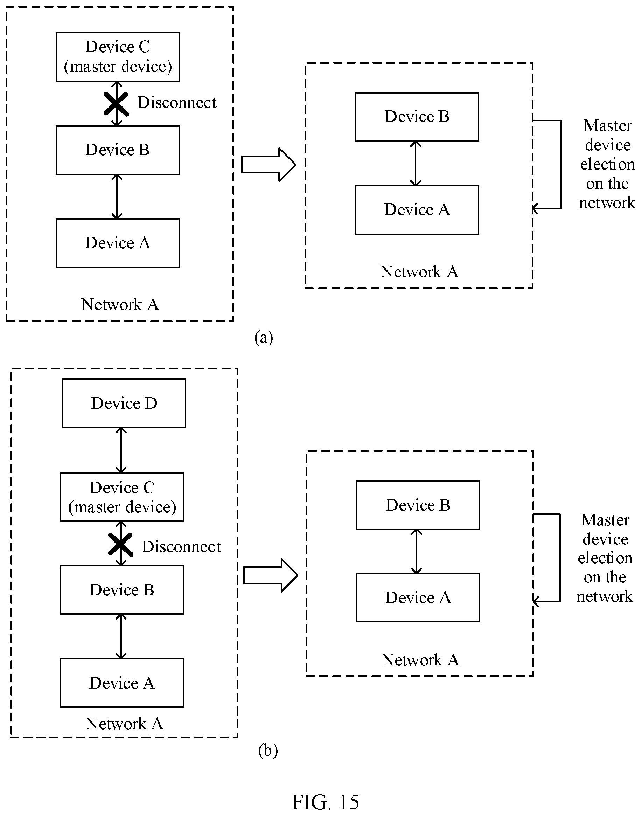

Case 2: A device exits the network. As shown in (a) in FIG. 15, if a device C exits a network A (the network A includes the device A, the device B, and a device C, where the device C is a master device on the original network A), master device election on the network A is triggered. For another example, as shown in (b) in FIG. 15, if there is a connection relationship between a device C and a device D on a network A (the network A includes the device A, the device B, the device C, and the device D, where the device C or the device D is a master device on the original network A), master device election on the network A is triggered.

Case 3: The master device no longer serves as the master device.

For example, that the master device no longer serves as the master device may be caused by one or more of the following reasons: A battery level of the master device is lower than a preset value, the master device moves away from another device on the network, the master device enters a sleep state, load of the master device is higher than a preset value, triggering is performed at scheduled time, and the like. This is not specifically limited in this application.

S1302: The AP processor of the device A and an AP processor of the device B determine, through election, that the device A is the master device on the network.

In a possible implementation, all devices on the network, for example, the device A and the device B, may broadcast respective master device election parameters, and the devices on the network may determine, based on a master device election parameter of another device and the master device election parameters of the devices, whether the devices meet a condition for serving as the master device.

For example, the master device election parameter may be device information. The device information may include but is not limited to one or more of the following: a device scenario (for example, a home scenario or a travel scenario), a device type, a device function (for example, a communication capability), power supply information (for example, a power supply manner and a battery level), a device status (for example, an active state and a sleep state), a motion status (for example, a static state or a moving state), service information (for example, whether a high-load service is being performed), duration of entering the network, and the like.

In an example, the master device on the network has one or more of the following features: having a strong device function, being powered by a direct plug-in power supply, being powered by a battery but having a high remaining battery level, being in an active state, being in a static state, and carrying no high-load service.

Alternatively, for example, the master device election parameter may be a score for the device information, and the devices on the network may determine, based on a score of another device for the device information and scores of the devices for the device information, whether the devices meet a condition for serving as the master device.

In an example, the score for the device information may be determined by a device based on a score of one or more of the following indicators of the device: a device scenario, a device type, a device function, power supply information, a device status, a motion status, service information, and duration for entering the network. A score of a device with a strong device function is higher than a score of a device with a weak device function, a score of a device powered by a direct plug-in power supply is higher than a score of a device powered by a battery, a score of a device with a high remaining battery level is higher than a score of a device with a low remaining battery level, a score of a device in an active state is higher than a score of a device in a sleep state, a score of a static device is higher than a score of a moving device, and a score of a device carrying no high-load service is higher than a score of a device carrying a high-load service.

For example, the device may calculate a score of the device for the device information according to a calculation formula: score of a device type + score of a communication capability + score of a power supply type. Scores of different device types, different communication capabilities, and different power supply types are separately shown in the following Table 2, Table 3, and Table 4.

**Table 2**

| Device type | Score |
|---|---|
| Mobile phone and tablet computer | 500 |
| In-vehicle infotainment, large screen, and PC | 500 |
| Smartwatch and speaker | 300 |
| Speaker and router | 300 |
| Smart band and sports watch | 0 |
| IOT device and sensor | 0 |

**Table 3**

| Communication capability | Score |
|---|---|
| Wi-Fi | 300 |
| LAN | 300 |
| BLE | 100 |
| BR | 0 |
| USB | 0 |
| Other | 0 |

**Table 4**

| Power supply type | Score |
|---|---|
| Powered by a power supply | 500 |
| Powered by a battery insensitive to power consumption | 80 |
| Powered by a battery sensitive to power consumption | 20 |

In Table 3, the LAN means a local area network (local area network). In Table 3, both the BR and the USB communication modes are point-to-point communication, and therefore are not suitable for serving as the master device on the network, and then scores are all 0. The BLE communication may support access for an unlimited quantity of times, and therefore a score of the BLE communication is slightly higher than that of the BR communication and the USB communication. Although the LAN has a high-bandwidth characteristic, Wi-Fi has wider coverage and is more flexible than the LAN. In this case, Wi-Fi is more suitable for serving as the master device on the network than the LAN, and then a score of Wi-Fi is higher than that of the LAN.

In Table 4, a device powered by a power supply is, for example, a large screen, a router, a speaker, an in-vehicle infotainment, or a smart home device like a light or a switch. A device powered by a battery insensitive to power consumption is, for example, a mobile phone or a tablet computer. A device powered by a battery sensitive to power consumption is, for example, a smartwatch, a smart band, a sports watch, a phone watch, a wireless headset, or a door lock.

For example, in a home scenario, scores of devices in descending order may be as follows: Router > Speaker > Large screen (for example, a television) > PC > Mobile phone. For example, in a travel scenario, scores of devices in descending order may be as follows: In-vehicle infotainment > PC > Mobile phone > Smartwatch.

Alternatively, the devices on the network may determine the master device on the network through election in another manner. A specific manner is not limited in embodiments of this application.

S1303: The AP processor of the device A sends an AP clock of the device A to an SH chip of the device A.

The clocks in this embodiment of this application include the AP clock and a hardware clock, and may be a time length starting from a past time point.

S1304: The SH chip of the device A determines a software and hardware clock offset of the device A.

S1305: The SH chip of the device A sends a broadcast message, where the broadcast message carries a hardware clock, a broadcast parameter, and a scanning parameter of the device A.

The hardware clock of the device A is obtained through calculation by the SH chip of the device A based on the AP clock of the device A and the software and hardware clock offset of the device A. For example, the hardware clock of the device A equals the AP clock of the device A plus the software and hardware clock offset of the device A.

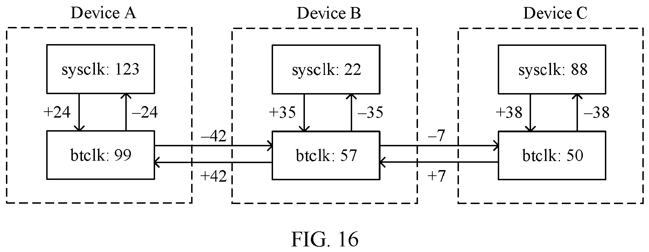

For example, FIG. 16 is a diagram of a clock alignment process according to this embodiment of this application. As shown in FIG. 16, it is assumed that the AP clock of the device A is sysclk: 123, and the software and hardware clock offset is 24. In this case, the SH chip of the device A obtains the hardware clock (for example, btclk) of the device A through calculation based on the AP clock (namely, sysclk: 123) of the device A and the software and hardware clock offset (namely, -24) of the device A, that is, 123-24=99.

S1306: An SH chip of the device B aligns a hardware clock of the device B after obtaining, through scanning, the broadcast message sent by the SH chip of the device A.

In a possible implementation, the SH chip of the device B may recalculate the hardware clock of the device B based on the hardware clock of the device A carried in the broadcast message and a hardware clock offset between the device B and the master device (namely, the device A), to align the hardware clock of the device B.

For example, the SH chip of the device B may obtain the hardware clock offset between the device B and the master device (namely, the device A) in a command (for example, a HCI_Read_Clock_Offset command) query manner.

For example, it is assumed that the device A shown in FIG. 16 is a master device of the device B, and the device B is a master device of the device C. As shown in FIG. 16, it is assumed that the AP clock of the device A is sysclk: 123, and the software and hardware clock offset is 24; an AP clock of the device B is sysclk: 22, and a software and hardware clock offset is -35; and an AP clock of the device C is sysclk: 88, and a software and hardware clock offset is 38. In this case, after the SH chip of the device A obtains the hardware clock (for example, btclk) of the device A, that is, 99, through calculation based on the AP clock of the device A (namely, sysclk: 123) and the software and hardware clock offset (namely, 24) of the device A, the SH chip of the device A broadcasts the hardware clock of the device A to the SH chip of the device B. The SH chip of the device B obtains the hardware clock of the device B through calculation based on the hardware clock (namely, btclk: 99) of the device A and the hardware clock offset (-42 shown in FIG. 16) between the device B and the device A, that is, 99 - 42 = 57.

Similarly, as shown in FIG. 16, the device C may obtain a hardware clock of the device C through calculation based on the aligned hardware clock (namely, sysclk: 57) of the master device (namely, the device B) of the device C and a hardware clock offset between the device C and the device B (-7 shown in FIG. 16), that is, 57-7=50.

In a possible implementation, the SH chip of the device B may periodically align the hardware clock of the device B based on the broadcast message sent by the SH chip of the device A, to maintain high-precision clock alignment.

S1307: The SH chip of the device B reports the aligned hardware clock of the device B to the AP processor of the device B.

S1308: The AP processor of the device B aligns the AP clock of the device B based on a software and hardware clock offset of the device B.

In a possible implementation, the AP processor of the device B may obtain the AP clock of the device B through calculation based on the aligned hardware clock of the device B reported by the SH chip of the device B and the software and hardware clock offset of the device B. For example, the AP clock of the device B equals the hardware clock of the device B minus the software and hardware clock offset of the device B.

For example, as shown in FIG. 16, after the SH chip of the device B aligns the hardware clock of the device B, the AP processor of the device B may obtain the AP clock of the device B based on the aligned hardware clock (namely, sysclk: 57) of the device B and the software and hardware clock offset (-35 shown in FIG. 16) of the device B, that is, 57-35=22.

Similarly, as shown in FIG. 16, after an SH chip of the device C aligns the hardware clock of the device C, an AP processor of the device C may obtain an AP clock of the device C based on an aligned hardware clock (namely, sysclk: 50) of the device C and a software and hardware clock offset (38 shown in FIG. 16) of the device C, that is, 50+38=88.

Based on the diagram of the clock alignment process shown in FIG. 6, it may be understood that software and hardware clocks may be aligned in a relay manner based on the inter-device clock synchronization method provided in Embodiment 4 of this application. For example, as shown in FIG. 16, the device B may align the hardware clock of the device B based on the hardware clock of the device A, and align the AP clock of the device B based on the hardware clock of the device B. In addition, the device C may align the hardware clock of the device C based on the hardware clock of the device B, and align the AP clock of the device C based on the hardware clock of the device C. In this way, multi-device software and hardware clock alignment can be implemented in a relay manner.

S1309: The AP processor of the device B aligns a broadcast window with a scanning window of the device A, and aligns a scanning window with a broadcast window of the device A.

The alignment in Embodiment 4 of this application may mean complete alignment. To be specific, each broadcast window is aligned with the scanning window of the device A, and each scanning window is aligned with the broadcast window of the device A.

In a possible implementation, the AP processor of the device B may align the broadcast window with the scanning window of the device A and align the scanning window with the broadcast window of the device A by using a waiting or an advancing window offset.

Alternatively, the alignment in Embodiment 4 of this application may be periodic alignment.

In a possible implementation, the AP processor of the device B may adjust a broadcast (/scanning) frequency of the AP processor of the device B, so that the broadcast (/scanning) frequency of the device B is in a multiple relationship with a scanning (/broadcast) frequency of the device A. In this way, the scanning window of the device B is periodically aligned with the broadcast window of the device A, and the broadcast window of the device B is periodically aligned with the scanning window of the device A.

S1310: The AP processor of the device B synchronizes an aligned broadcast window of the device B and an aligned scanning window of the device B to the SH chip of the device B.

Then, the SH chip of the device B may send the broadcast message in the aligned broadcast window, and perform scanning in the aligned scanning window. This improves a hit rate of the broadcast message, and further improves a keepalive effect.

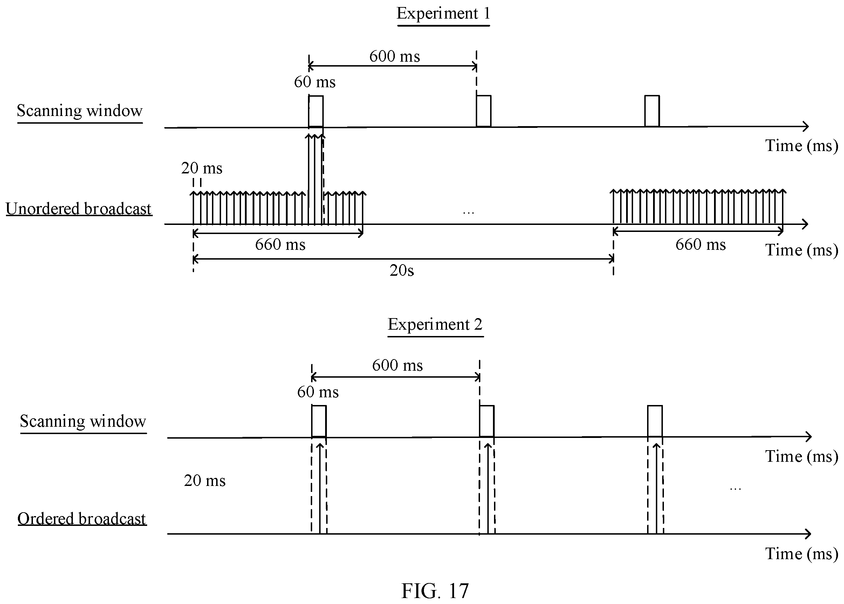

In an example, it is assumed that unordered broadcast and ordered broadcast are separately performed based on experimental steps shown in the following Table 5. Sending of the unordered broadcast and the ordered broadcast and scanning of a peer device may be shown in FIG. 17.

**Table 5**

| Experiment | Experimental steps | Data recording | Hit rate | Keepalive performance | Keepalive success rate |
|---|---|---|---|---|---|
| Experiment 1: Unordered broadcast | 1. A scanning device BLE does not perform alignment, and performs background scanning by using a duty cycle of | Send 60 groups of burst broadcasts (1980 broadcasts) in total within 20 | 6.8% | 20s | 95% |
| | 60/600 | minutes, and successfully receive three groups of burst broadcasts (135 broadcasts) | | | |
| | 2. A broadcast device sends a burst broadcast, and sends the burst broadcast for 660 ms at an interval of 20s | | | | |
| | 3. Record reception of the burst broadcast | | | | |
| Experiment 2: Ordered broadcast | 1. A broadcast device and a scanning device perform time alignment in advance | Send 2400 broadcasts in total within 24 minutes, and successfully receive 1625 broadcasts | 67.7% | 6s | 100% |
| | 2. The scanning device BLE performs reset alignment, and performs reset alignment scanning every 600 ms | | | | |
| | 3. The broadcast device performs BLE broadcast and sends a regular broadcast packet every 600 ms | | | | |
| | 4. Record reception of the broadcast | | | | |

It can be learned from the experiments that, as shown in FIG. 17, when the broadcast device does not align the broadcast window and sends the unordered broadcast shown in FIG. 17, it is difficult to ensure that the broadcast message from the broadcast device is scanned by the scanning device in the scanning window of the scanning device. However, if the broadcast device aligns the broadcast window and sends the ordered broadcast shown in FIG. 17, basically all broadcast messages sent by the broadcast device can be scanned by the scanning device in the scanning window of the scanning device.

In addition, as shown in Table 5, for the unordered broadcast, a hit rate is 6.8%, keepalive performance is 20s, and a keepalive success rate is 95%; and for the ordered broadcast, a hit rate is 67.7%, keepalive performance is 6s, and a keepalive success rate is 100%.

It can be learned that, compared with the unordered broadcast, the ordered broadcast is used to implement alignment between the broadcast window of the device and the scanning window of a peer device by dynamically adjusting the broadcast parameter; and implement alignment between the scanning window of the device and the broadcast window of the peer device by dynamically adjusting the scanning parameter, so that a hit rate of the broadcast message can be increased, and a keepalive effect can be significantly improved. Therefore, device discovery and keepalive performance can be improved. Optionally, the window alignment may be periodically performed, and the windows can always be aligned with high precision through periodic window alignment.

In addition, because alignment of software and hardware clocks of a plurality of devices may be implemented in a relay manner, according to the window alignment strategy provided in Embodiment 4 of this application, precision of cascading synchronization at the SH chip layer is higher than that of synchronization of only the AP clock, and then subsequent window alignment is more effective.

The solution in Embodiment 4 of this application is applicable to clock alignment and window alignment between single-chip devices, or is applicable to clock alignment inside a dual-chip device and window alignment between dual-chip devices. For example, the dual-chip device is a dual-Bluetooth chip device or a dual-Wi-Fi chip device.

Further, optionally, after clock synchronization and window alignment are implemented on the network, if a case in which master device election on the network is triggered occurs on the network, for example, a new device joins the network, a device exits the network, or the master device no longer serves as the master device, the devices on the network determine the master device through re-election, and re-perform clock alignment according to the solution in Embodiment 4, to implement window alignment.

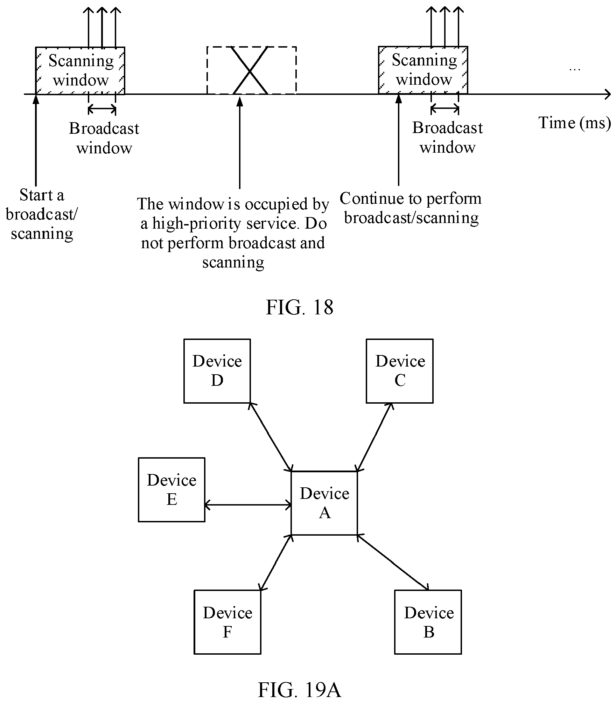

A network structure shown in FIG. 19A is used as an example. For example, it is assumed that a device A is the master device on the network, and devices on the network have completed clock alignment and window alignment. In this case, the device A serving as the master device on the network may periodically send a broadcast message. If slave devices (a device B, a device C, a device D, and a device E shown in FIG. 19A) on the network do not obtain the broadcast message from the master device through scanning in a corresponding scanning window, it is determined that the device A is not online. In this case, master device re-election on the network may be triggered.

In addition, optionally, in some embodiments of this application, when the SH chip of the device B sends the broadcast message and scans the broadcast message respectively based on the aligned broadcast window and scanning window, if it is determined that a channel in a nearest broadcast window/scanning window is occupied by a task with a higher priority, the SH chip of the device B may not send a broadcast signal in the broadcast window/scanning the broadcast message in the scanning window, and continue to perform accurate broadcast/scanning in a subsequent broadcast window/scanning window.

For example, FIG. 18 is a diagram of a process of yielding to a high-priority service according to this embodiment of this application. As shown in FIG. 18, after starting a broadcast and scanning, the device may start to periodically send a broadcast message in the broadcast window and scan the broadcast message in the scanning window. Because the second window is occupied by a high-priority task, the device does not perform broadcasting in the second broadcast window and does not perform scanning in the second scan window. After the priority service is completed, the device may continue to perform broadcast/scanning in a subsequent broadcast window/scanning window.

According to a strategy similar to the yielding strategy shown in FIG. 18, the high-priority service cannot be interrupted or affected, and normal and timely running of the high-priority service can be ensured.

Further, optionally, the master device and the slave device on the network in Embodiment 4 of this application may align BLE periodic broadcasts.

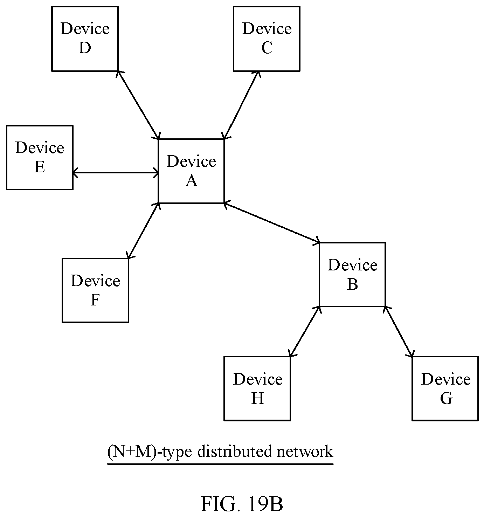

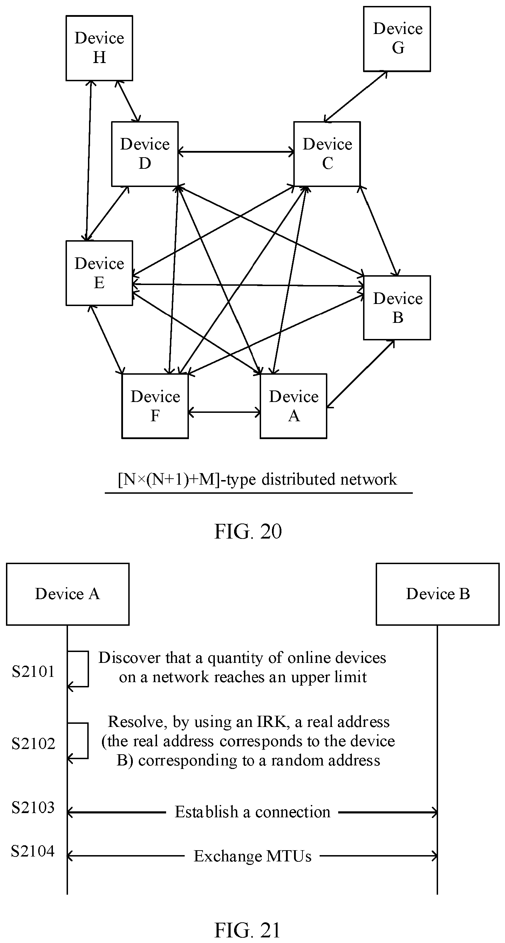

The network in this embodiment of this application may include but is not limited to an (N+M)-type distributed network (also referred to as an (N+M) star topology network) shown in FIG. 19B or an [N×(N+1)+M]-type distributed network (also referred to as a multi-center heterogeneous topology network) shown in FIG. 20.

The (N+M)-type distributed network shown in FIG. 19B is used as an example. It is assumed that the master device on the network is the device A, and the devices on the network may align the BLE periodic broadcasts by performing the following step A to step D.

Step A: The master device (namely, the device A) starts periodic broadcast, carries a broadcast content identifier identifying that the device A is the master device, and indicates a time window for the periodic broadcast to another device.

Step B: The another device (namely, the slave device) on the network scans a periodic broadcast message in the specified time window.

Step C: After obtaining a broadcast message from the device A through scanning, the another device (namely, the slave device) on the network replies to the broadcast message from the device A in the time window for the periodic broadcast indicated by the master device.

Step D: Complete establishment of the periodic BLE broadcasts on the network after the master device (namely, the device A) receives the reply from the another device (namely, the slave device).

In a possible implementation, for the (N+M)-type distributed network, the master device on the network may establish the periodic broadcast according to the following method: A master node starts periodic broadcast, and starts to monitor a broadcast response of the slave device on the network. After the periodic broadcast response of the slave device on the network is received, establishment of the periodic broadcast from the master node is completed.

In some embodiments, the master device on the network may initiate a task by using the periodic broadcast. For example, the master device may carry device information of the master device, target device information, and task information data in the periodic broadcast. The device that obtains the periodic broadcast by scanning may identify, based on the target device information carried in the periodic broadcast, whether the task to be initiated by the master device is performed for the device. If the device determines that the task to be initiated by the master device is performed for the device, the device may initiate a fast BLE connection to the master device or reply to the periodic broadcast.

In some other embodiments, the master device on the network may alternatively broadcast device statuses of devices on the network by using the periodic broadcast. For example, the master device on the network may maintain a status information list of the devices on the network. In addition, the slave device on the network may also store the status information list of the devices on the network. If the master device on the network perceives that a device status of a device on the network changes, the master device may notify the device status of the device or notify an updated status information list of the devices on the network to another device on the network by using the periodic broadcast, so that the slave device updates the status information list of the devices on the network.

In a possible implementation, for the (N+M)-type distributed network, the slave device on the network may establish the periodic broadcast group according to the following method: subscribing to a periodic broadcast from the master device after the slave device on the network is online. The slave device completes synchronization of the periodic broadcast after obtaining the periodic broadcast from the master device through scanning, and replies to the periodic broadcast from the master device after completing synchronization of the periodic broadcast.

In some embodiments, the slave device on the network may initiate a task by using the periodic broadcast. For example, the slave device may carry device information of the slave device, target device information, and task information data in the periodic broadcast. The master device that obtains the periodic broadcast through scanning may initiate the task to all devices on the network. For example, the master device may carry the device information of the master device, the target device information, and the task information data in the periodic broadcast. The device that obtains the periodic broadcast by scanning may identify, based on the target device information carried in the periodic broadcast, whether the task to be initiated by the master device is performed for the device. If the device determines that the task to be initiated by the master device is performed for the device, the device may initiate a fast BLE connection to the master device or reply to the periodic broadcast.

In some other embodiments, the slave device on the network may initiate master device election on the network by using the periodic broadcast. For example, it is assumed that the slave device on the network perceives that the master device on the network changes from an active state to an idle state. In this case, the slave device may initiate master device election on the network by using the periodic broadcast, to re-determine the master device on the network.

The [N×(N+1)+M]-type distributed network shown in FIG. 20 is used as an example. It is assumed that the master device on the network is the device A, and the devices on the network may align the BLE periodic broadcasts by performing the following step a to step d.

Step a: The master device (namely, the device A) starts periodic broadcast on a first channel, carries a broadcast content identifier identifying that the device A is the master device, and indicates a time window for the periodic broadcast to another device.

Step b: The another device (namely, the slave device) on the network scans a periodic broadcast message in the specified time window.

Step c: After obtaining a broadcast message from the device A scanning, the another device (namely, the slave device) on the network starts local periodic broadcast based on the time window assigned on the network.

Step d: Complete establishment of the periodic BLE broadcasts on the network after the master device (namely, the device A) obtains the periodic broadcast from the another device (namely, the slave device) through scanning.

In a possible implementation, for the [N×(N+1)+M]-type distributed network, the master device on the network may establish periodic broadcast according to the following method: A master node starts periodic broadcast on a first channel, and subscribes to a periodic broadcast on the first channel of the online slave device on the network. After obtaining the periodic broadcast from the slave device on the network through scanning, the master device completes synchronization of the periodic broadcasts, in other words, completes establishment of the periodic broadcast from the master node.

In a possible implementation, for the [N×(N+1)+M]-type distributed network, the slave device on the network may establish the periodic broadcast according to the following method: after the slave device on the network is online, subscribing to a periodic broadcast from the master device, and starting periodic broadcast from the slave device. After obtaining the periodic broadcast from the master device through scanning, the slave device completes synchronization of the periodic broadcast, in other words, completes establishment of the periodic broadcast from a master node.

In some embodiments, the master device or the slave device on the network may initiate a task by using the periodic broadcast. For example, a task initiation device may carry device information of the task initiation device, target device information, and task information data in the periodic broadcast. A device that obtains the periodic broadcast by scanning may identify, based on the target device information carried in the periodic broadcast, whether the task to be initiated is performed for the device. If the device determines that the task to be initiated is performed for the device, the device may initiate a fast BLE connection to the task initiation device or reply to the periodic broadcast.

In some other embodiments, the master device or the slave device on the network may alternatively periodically broadcast a device status of the master device or the slave device. For example, the devices on the network may maintain a status information list of the devices on the network. If a device status of a device changes, the device may notify the status of the device to another device on the network by using the periodic broadcast, so that the another device updates the status information list of the devices on the network.

For example, it is assumed that the devices on the network have completed clock alignment and window alignment, and each device on the network may periodically send a broadcast message, where the broadcast message carries device information of the device. For example, a device 1 on the network periodically sends the broadcast message. Other devices on the network perform scanning in respective scanning windows. If the broadcast message from the device 1 is obtained through scanning, the device 1 is identified as online. If the broadcast message from the device 1 is not obtained through scanning, the device 1 is identified as offline. In this way, all the devices on the network may update the status information list of the devices on the network.

Optionally, Embodiment 4 of this application may be combined with one or more of Embodiment 1 to Embodiment 3 to be used in an inter-device connection management process.

For example, Embodiment 4 is performed based on the solution provided in Embodiment 1. It is assumed that the AP processor of the device A performs unidirectional declarative broadcast according to the method in Embodiment 1. After the device B obtains, through scanning, a broadcast message that is from the device A and that meets the device online condition, the device A and device B perform connection authentication, and determine the master device on the network. It is assumed that the master device on the network is the device A. The device A broadcasts information such as a hardware clock, a broadcast parameter, and a scanning parameter of the device A, and then the slave device (namely, the device B) adjusts a hardware clock and an AP clock of the slave device based on the foregoing information, so that the hardware clock and the AP clock of the slave device are respectively synchronized with the hardware clock and an AP clock of the master device. Further, the device B adjusts the broadcast parameter based on an adjusted hardware clock and AP clock, and then an SH chip of the device B may send a broadcast message in a broadcast window aligned with a scanning window of the device A; and adjusts the scanning parameter based on the adjusted hardware clock and AP clock, and then the SH chip of the device B may scan the broadcast message in a scanning window aligned with a broadcast window of the device A.

For example, Embodiment 4 is performed based on the solutions provided in Embodiment 1 and Embodiment 2. It is assumed that the AP processor of the device A performs unidirectional declarative broadcast according to the method in Embodiment 1. After the SH chip of the device A obtains a broadcast message from the device B through scanning, the SH chip of the device B determines whether the device A is in the online device list. If the device A is in the online device list, the SH chip of the device B replies to the device A through broadcast based on the proxy reply template. If the device A is not in the online device list, the SH chip of the device B reports, to the AP processor, that the device A is discovered, and the AP processor of the device B performs connection authentication with the device A and updates the online device list. After performing the connection authentication, the device A and the device B determine the master device on the network. It is assumed that the master device on the network is the device A. The device A broadcasts information such as a hardware clock, a broadcast parameter, and a scanning parameter of the device A, and then the slave device (namely, the device B) adjusts a hardware clock and an AP clock of the slave device based on the foregoing information, so that the hardware clock and the AP clock of the slave device are respectively synchronized with the hardware clock and an AP clock of the master device. Further, the device B adjusts the broadcast parameter based on an adjusted hardware clock and AP clock, and then an SH chip of the device B may send a broadcast message in a broadcast window aligned with a scanning window of the device A; and adjusts the scanning parameter based on the adjusted hardware clock and AP clock, and then the SH chip of the device B may scan the broadcast message in a scanning window aligned with a broadcast window of the device A.

For example, Embodiment 4 is performed based on the solutions provided in Embodiment 1 and Embodiment 3. It is assumed that the device B performs device offline/online management according to the method in Embodiment 3, and the AP processor of the device A performs unidirectional declarative broadcast according to the method in Embodiment 1. After the SH chip of the device A obtains, through scanning, a broadcast message that is from the device B and that meets the device online condition, the SH chip of the device A reports, to the AP processor, that the device A is discovered, and the AP processor of the device B performs connection authentication with the device A and updates the online device list. After performing the connection authentication, the device A and the device B determine the master device on the network. It is assumed that the master device on the network is the device A. The device A broadcasts information such as a hardware clock, a broadcast parameter, and a scanning parameter of the device A, and then the slave device (namely, the device B) adjusts a hardware clock and an AP clock of the slave device based on the foregoing information, so that the hardware clock and the AP clock of the slave device are respectively synchronized with the hardware clock and an AP clock of the master device. Further, the device B adjusts the broadcast parameter based on an adjusted hardware clock and AP clock, and then an SH chip of the device B may send a broadcast message in a broadcast window aligned with a scanning window of the device A; and adjusts the scanning parameter based on the adjusted hardware clock and AP clock, and then the SH chip of the device B may scan the broadcast message in a scanning window aligned with a broadcast window of the device A.

For example, Embodiment 4 is performed based on the solutions provided in Embodiment 1, Embodiment 2, and Embodiment 3. It is assumed that the device B performs device offline/online management according to the method in Embodiment 3, and the AP processor of the device A performs unidirectional declarative broadcast according to the method in Embodiment 1. After the SH chip of the device A obtains, through scanning, a broadcast message that is from the device B and that meets the device online condition, the SH chip of the device B determines whether the device A is in the online device list. If the device A is in the online device list, the SH chip of the device B replies to the device A through broadcast based on the proxy reply template. If the device A is not in the online device list, the SH chip of the device B reports, to the AP processor, that the device A is discovered, and the AP processor of the device B performs connection authentication with the device A and updates the online device list. After performing the connection authentication, the device A and the device B determine the master device on the network. It is assumed that the master device on the network is the device A. The device A broadcasts information such as a hardware clock, a broadcast parameter, and a scanning parameter of the device A, and then the slave device (namely, the device B) adjusts a hardware clock and an AP clock of the slave device based on the foregoing information, so that the hardware clock and the AP clock of the slave device are respectively synchronized with the hardware clock and an AP clock of the master device. Further, the device B adjusts the broadcast parameter based on an adjusted hardware clock and AP clock, and then an SH chip of the device B may send a broadcast message in a broadcast window aligned with a scanning window of the device A; and adjusts the scanning parameter based on the adjusted hardware clock and AP clock, and then the SH chip of the device B may scan the broadcast message in a scanning window aligned with a broadcast window of the device A.

It may be understood that alignment between the broadcast window and the scanning window has a large impact on device discovery and keepalive performance, and a hit rate of the broadcast is low if the scanning window is not aligned with the broadcast window. According to the solution provided in Embodiment 4, master device election is performed on the network. The master device initiates clock alignment and window alignment, and the slave devices separately (or in a relay manner) complete alignment with the broadcast window/scanning window of the master device based on the hardware clock of the master device. The broadcast window of the device is aligned with the scanning window of the peer device by dynamically adjusting the broadcast parameter, or the scanning window of the device is aligned with the broadcast window of the peer device by dynamically adjusting the scanning parameter, so that a hit rate of the broadcast message can be increased, and a keepalive effect is significantly improved. Therefore, device discovery performance can be improved. In addition, because alignment of software and hardware clocks (namely, the AP clocks and the hardware clocks) can be relayed, high-precision discovery and keepalive performance of the devices on the network can be implemented.

### Embodiment 5

In an inter-device connection management method provided in Embodiment 5, when there are a large quantity of online devices on a network, a connection relationship between the devices may be established through a fast BLE connection.

Further, optionally, when there are a large quantity of online devices on a network, a directional notification may be sent through a fast BLE connection established between the devices, for example, the directional notification is sent to a specified device on the network.

FIG. 21 is a diagram of a process of establishing the fast BLE connection according to this embodiment of this application by using an example in which a device A is a master device on the network. As shown in FIG. 21, a method for establishing the fast BLE connection provided in this embodiment of this application may include S2101 to S2104.

S2101: The device A discovers that a quantity of online devices on the network reaches an upper limit.

For example, the device A discovers that a quantity of online devices on the network is greater than a preset quantity threshold.

S2102: The device A resolves a random address by using an address resolving key (identity resolving key, IRK), to obtain a corresponding real address, where the real address corresponds to a device B.

The IRK is cached in the device A when the device B and the device A are paired last time. Generally, the IRK is automatically generated before delivery based on a specific requirement. After Bluetooth pairing is performed between the device A and the device B, the IRK of the device is generated and cached in a peer device. In an example, the device A may cache the IRK of the device B in a form of IRK key address pair.

In addition, when the device B and the device A are paired last time, a service discovery handle (Handle) is cached together with the IRK. The service discovery handle is used to directly establish the fast BLE connection by invoking a previous service discovery result when the fast BLE connection is subsequently established, and a time-consuming service discovery phase does not need to be performed again. Therefore, the fast BLE connection is established faster.

It may be understood that, if the IRK of the device B is known, when the device B is discovered again, the real address of the device B may be obtained by resolving the random address of the device B. After knowing the real address of the device B, the device A may skip the time-consuming service discovery phase according to a Bluetooth low energy communication protocol (generic attributes, GATT), and directly establish the fast BLE connection to the device B.

Then, the device A and the device B may establish the fast BLE connection. Establishment of the fast BLE connection mainly includes two phases: a connection establishment phase (namely, S2103) and an MTU exchange phase (namely, S2104). It can be learned that, compared with a conventional BLE connection, the fast BLE connection skips the most time-consuming BLE service discovery phase, so that a BLE connection establishment speed is faster.

S2103: The device A establishes the connection to the device B.

S2104: The device A and the device B exchange maximum transmission units (maximum transmission units, MTUs).

The device A and the device B exchange the MTUs, to notify a peer device of a maximum size of a data packet that can be accepted by the device A or the device B. For related descriptions of the MTU, refer to the conventional technology. Details are not described herein again.

As we know, because the BLE connection is based on Characteristic for communication, a device may read data from Characteristic or write data to Characteristic. During data reading and writing, Characteristic may be identified by different UUIDs. Therefore, communication performed through the BLE connection is equivalent to receiving and sending separately performed through a reading channel and a writing channel that do not affect each other. Based on the foregoing reasons, compared with another type of Bluetooth connection (for example, a BR Bluetooth connection), the BLE connection has the following advantages.

Advantage 1: The BLE connection supports bidirectional communication, and therefore, there is no bidirectional conflict (also referred to as concurrency conflict) problem.

Advantage 2: A communication speed of the BLE connection is fast.

For example, according to experimental statistics, a packet sending interval based on the BLE connection is 2.5 ms, and a packet sending interval based on the BR Bluetooth connection is 20 ms.

Advantage 3: The BLE connection supports a large quantity of connectable devices.

For example, the BLE connection does not limit a quantity of connectable devices, but the BR Bluetooth connection supports connection to only seven devices.

Therefore, in Embodiment 4 of this application, the fast BLE connection is established when there are a large quantity of devices on the network, and the peer device is directionally notified or woken up through the fast BLE connection. This can avoid a broadcast storm, support bidirectional communication, improve a communication speed on the network, and allow another device to continue to join the network. In addition, because the most time-consuming BLE service discovery phase is skipped during establishment of the fast BLE connection, the BLE connection is established faster.

Further, in this embodiment of this application, when there are a large quantity of online devices on the network, the directional notification may be further sent through the fast BLE connection established between the devices, for example, the directional notification is sent to a specified device on the network. In this way, according to this method, another irrelevant device is not disturbed, information can be accurately sent, and the broadcast storm existing in broadcast can be avoided.

Optionally, Embodiment 5 of this application may be combined with one or more of Embodiment 1 to Embodiment 4 to be used in an inter-device connection management process. Specifically, in a process of executing the solution in any combination of Embodiment 1 to Embodiment 4, when there are a large quantity of online devices on the network, a connection relationship between devices may be established through the fast BLE connection.

It may be understood that, according to the inter-device connection management method provided in embodiments of this application, a strategy, an interaction process, and the like of an inter-device connection are improved from different aspects (such as a device discovery manner, a broadcast type, an SH chip proxy function, online/offline determining, window alignment, and a connection manner). This can reduce a device discovery delay (for example, according to a test, a device discovery delay is about 10s, device discovery delays of 99% of devices are less than 30s), save communication resources, and reduce device power consumption. In addition, this can avoid a broadcast storm, avoid interference between devices, increase a device discovery success rate, improve a keepalive effect, and improve device discovery and keepalive performance.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, an electronic device includes a corresponding hardware structure and/or software module for executing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used.

It should be further understood that each module in the electronic device may be implemented in a form of software and/or hardware. This is not specifically limited herein. In other words, a smart rope jumping/the electronic device is presented in a form of functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state disk (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the electronic device. Certainly, the processor and the storage medium may alternatively exist in the electronic device as discrete components.

The foregoing descriptions about implementations allow a person skilled in the art to clearly understand that, for the purpose of convenient and brief description, division of the foregoing functional modules is taken as an example for illustration. During actual application, the foregoing functions may be allocated to different functional modules for implementation based on a requirement, in other words, an inner structure of an apparatus is divided into different functional modules to implement all or some of the functions described above.

## Claims

1. An inter-device connection management method, wherein the method comprises:
sending (S1103), by an application, AP, processor of a first device, a proxy indication to a sensor hub, SH chip of the first device, wherein the proxy indication carries an online device list, a broadcast strategy, and a scanning strategy, and the proxy indication indicates the SH chip to serve as a proxy of the AP processor to perform device discovery and keepalive;
sending (S1104), by the SH chip, a broadcast message according to the broadcast strategy, and performing scanning according to the scanning strategy;
determining (S1106), by the SH chip when the SH chip discovers a second device through scanning, whether the second device is in the online device list; and
if the second device is not in the online device list, reporting (S1107-2), by the SH chip to the AP processor, that the second device needs to go online.

2. The method according to claim 1, wherein the method further comprises:
updating (S1109), by the AP processor, the online device list based on the report of the SH chip, wherein an updated online device list comprises information about the second device;
sending (S1110), by the AP processor, the updated online device list to the SH chip; and
performing, by the SH chip, device discovery and keepalive based on the updated online device list.

3. The method according to claim 1, wherein the method further comprises:
if the second device is in the online device list, replying (S1107-1), by the SH chip, to the second device with a broadcast message.

4. The method according to claim 3, wherein the proxy indication further carries a proxy reply template, and the replying (S1107-1), by the SH chip, to the second device with a broadcast message comprises:
replying, by the SH chip, to the second device with the broadcast message based on the proxy reply template.

5. The method according to any one of claims 1 to 3, wherein the proxy indication further carries a broadcast ID and a scanning ID, and the method further comprises:
modifying, by the AP processor, the broadcast strategy based on the broadcast ID and/or modifying the scanning strategy based on the scanning ID;
sending, by the AP processor, a modified broadcast strategy and/or scanning strategy to the SH chip; and
sending, by the SH chip, a broadcast message according to the modified broadcast strategy, and/or performing scanning according to the modified scanning strategy.

6. The method according to any one of claims 1 to 5, wherein the method further comprises:
entering, by the AP processor, a sleep state after the AP processor sends the proxy indication to the SH chip.

7. The method according to any one of claims 1 to 5, wherein the method further comprises:
after the AP processor sends (S1103) the proxy indication to the SH chip, processing, by the AP processor, a service whose priority is higher than that of a device discovery and keepalive service.

8. The method according to any one of claims 1 to 7, wherein the method further comprises:
reclaiming, by the AP processor, proxy permission of the SH chip.

9. The method according to any one of claims 2 to 8, wherein the method further comprises:
establishing (S1108), by the AP processor, a BLE connection to the second device based on the report of the SH chip.

10. The method according to claim 9, wherein the method further comprises:
in a process in which the AP processor establishes the BLE connection to the second device based on the report of the SH chip, storing, by the AP processor, a resolving key IRK and a service discovery handle that are of the second device; and
when a quantity of devices on a network on which the first device resides is greater than a preset value,
establishing, by the AP processor, a fast BLE connection to the second device based on the IRK and the service discovery handle that are of the second device.

11. The method according to claim 10, wherein the establishing, by the AP processor, a fast BLE connection to the second device based on the IRK and the service discovery handle that are of the second device comprises:
invoking, by the AP processor, the service discovery handle, and resolving (2102) a random address of the second device based on the IRK of the second device, to obtain a real address of the second device;
establishing (2103), by the AP processor, the connection to the second device based on the real address of the second device; and
exchanging (2104), by the AP processor, respective maximum transmission units MTUs with the second device.

12. The method according to claim 9 or 10, wherein the method further comprises:
sending, by the SH chip, a directional notification to the second device through the fast BLE connection.

13. The method according to any one of claims 1 to 12, wherein the determining, by the SH chip when the SH chip discovers a second device through scanning, whether the second device is in the online device list comprises:
determining, by the SH chip when obtaining a burst broadcast message from the second device through scanning, whether the second device is in the online device list.

14. A computer-readable storage medium, wherein the computer-readable storage medium stores computer-executable instructions, and when the computer-executable instructions are executed by a processing circuit, the method according to any one of claims 1 to 13 is implemented.

15. An electronic device including an application, AP, processor and a sensor hub, SH, chip, wherein the AP processor and the SH chip are configured to implement the method according to any one of claims 1 to 13.

## Patentansprüche

1. Vorrichtungsübergreifendes Verbindungsverwaltungsverfahren, wobei das Verfahren Folgendes umfasst:
Senden (S1103), durch einen Anwendungsprozessor, AP-Prozessor, einer ersten Vorrichtung, einer Proxy-Angabe an einen Sensor-Hub-Chip, SH-Chip, der ersten Vorrichtung, wobei die Proxy-Angabe eine Liste von Online-Vorrichtungen, eine Broadcast-Strategie und eine Abtaststrategie enthält und die Proxy-Angabe dem SH-Chip angibt, als ein Proxy des AP-Prozessors zu dienen, um eine Vorrichtungserkennung und eine Keepalive-Funktion durchzuführen;
Senden (S1104), durch den SH-Chip, einer Broadcast-Nachricht gemäß der Broadcast-Strategie und Durchführen von Abtasten gemäß der Abtast-Strategie;
Bestimmen (S1106), durch den SH-Chip, wenn der SH-Chip eine zweite Vorrichtung durch Abtasten erkennt, ob sich die zweite Vorrichtung auf der Liste der Online-Vorrichtungen befindet; und
wenn sich die zweite Vorrichtung nicht auf der Liste der Online-Vorrichtungen befindet, Melden (S1107-2), durch den SH-Chip an den AP-Prozessor, dass die zweite Vorrichtung online zu gehen hat.

2. Verfahren nach Anspruch 1, wobei das Verfahren ferner Folgendes umfasst:
Aktualisieren (S1109), durch den AP-Prozessor, der Liste der Online-Vorrichtungen basierend auf der Meldung des SH-Chips, wobei eine aktualisierte Liste der Online-Vorrichtungen Informationen über die zweite Vorrichtung umfasst;
Senden (S1110), durch den AP-Prozessor, der aktualisierten Liste der Online-Vorrichtungen an den SH-Chip; und
Durchführen, durch den SH-Chip, der Vorrichtungserkennung und der Keepalive-Funktion basierend auf der aktualisierten Liste der Online-Vorrichtungen.

3. Verfahren nach Anspruch 1, wobei das Verfahren ferner Folgendes umfasst:
wenn sich die zweite Vorrichtung auf der Liste der Online-Vorrichtungen befindet, Antworten (S1107-1), durch den SH-Chip, an die zweite Vorrichtung mit einer Broadcast-Nachricht.

4. Verfahren nach Anspruch 3, wobei die Proxy-Angabe ferner eine Proxy-Antwortvorlage enthält und das Antworten (S1107-1), durch den SH-Chip, an die zweite Vorrichtung mit einer Broadcast-Nachricht Folgendes umfasst:
Antworten, durch den SH-Chip, an die zweite Vorrichtung mit der Broadcast-Nachricht basierend auf der Proxy-Antwortvorlage.

5. Verfahren nach einem der Ansprüche 1 bis 3, wobei die Proxy-Angabe ferner eine Broadcast-ID und eine Abtast-ID enthält und das Verfahren ferner Folgendes umfasst:
Ändern, durch den AP-Prozessor, der Broadcast-Strategie basierend auf der Broadcast-ID und/oder Ändern der Abtast-Strategie basierend auf der Abtast-ID;
Senden, durch den AP-Prozessor, einer geänderten Broadcast-Strategie und/oder Abtast-Strategie an den SH-Chip; und
Senden, durch den SH-Chip, einer Broadcast-Nachricht gemäß der geänderten Broadcast-Strategie und/oder Durchführen von Abtasten gemäß der geänderten Abtast-Strategie.

6. Verfahren nach einem der Ansprüche 1 bis 5, wobei das Verfahren ferner Folgendes umfasst:
Übergehen, durch den AP-Prozessor, in einen Ruhezustand, nachdem der AP-Prozessor die Proxy-Angabe an den SH-Chip gesendet hat.

7. Verfahren nach einem der Ansprüche 1 bis 5, wobei das Verfahren ferner Folgendes umfasst:
nachdem der AP-Prozessor die Proxy-Angabe an den SH-Chip gesendet hat (S1103), Verarbeiten, durch den AP-Prozessor, eines Dienstes, dessen Priorität höher ist als die eines Vorrichtungserkennungs- und Keepalive-Funktions-Dienstes.

8. Verfahren nach einem der Ansprüche 1 bis 7, wobei das Verfahren ferner Folgendes umfasst:
Zurückfordern, durch den AP-Prozessor, einer Proxy-Berechtigung des SH-Chips.

9. Verfahren nach einem der Ansprüche 2 bis 8, wobei das Verfahren ferner Folgendes umfasst:
Herstellen (S1108), durch den AP-Prozessor, einer BLE-Verbindung zu der zweiten Vorrichtung basierend auf der Meldung des SH-Chips.

10. Verfahren nach Anspruch 9, wobei das Verfahren ferner Folgendes umfasst:
in einem Prozess, bei dem der AP-Prozessor die BLE-Verbindung zu der zweiten Vorrichtung basierend auf der Meldung des SH-Chips herstellt, Speichern, durch den AP-Prozessor, eines Auflösungsschlüssels, IRK, und eines Service-Discovery-Handles, die zu der zweiten Vorrichtung gehören; und
wenn eine Anzahl von Vorrichtungen in einem Netzwerk, in dem sich die erste Vorrichtung befindet, größer ist als ein voreingestellter Wert,
Herstellen, durch den AP-Prozessor, einer schnellen BLE-Verbindung zu der zweiten Vorrichtung basierend auf dem IRK und dem Service-Discovery-Handle, die zu der zweiten Vorrichtung gehören.

11. Verfahren nach Anspruch 10, wobei das Herstellen, durch den AP-Prozessor, einer schnellen BLE-Verbindung zu der zweiten Vorrichtung basierend auf dem IRK und dem Service-Discovery-Handle, die zu der zweiten Vorrichtung gehören, Folgendes umfasst:
Aufrufen, durch den AP-Prozessor, des Service-Discovery-Handles und Auflösen (2102) einer zufälligen Adresse der zweiten Vorrichtung basierend auf dem IRK der zweiten Vorrichtung, um eine echte Adresse der zweiten Vorrichtung zu erlangen;
Herstellen (2103), durch den AP-Prozessor, der Verbindung zu der zweiten Vorrichtung basierend auf der echten Adresse der zweiten Vorrichtung; und
Austauschen (2104), durch den AP-Prozessor, jeweiliger maximaler Übertragungseinheiten, MTUs, mit der zweiten Vorrichtung.

12. Verfahren nach Anspruch 9 oder 10, wobei das Verfahren ferner Folgendes umfasst:
Senden, durch den SH-Chip, einer Richtungsbenachrichtigung an die zweite Vorrichtung über die schnelle BLE-Verbindung.

13. Verfahren nach einem der Ansprüche 1 bis 12, wobei das Bestimmen, durch den SH-Chip wenn der SH-Chip eine zweite Vorrichtung durch Abtasten erkennt, ob sich die zweite Vorrichtung auf der Liste der Online-Vorrichtungen befindet, Folgendes umfasst:
Bestimmen, durch den SH-Chip wenn er eine Burst-Broadcast-Nachricht von der zweiten Vorrichtung durch Abtasten erlangt, ob sich die zweite Vorrichtung auf der Liste der Online-Vorrichtungen befindet.

14. Computerlesbares Speichermedium, wobei das computerlesbare Speichermedium computerausführbare Anweisungen speichert und, wenn die computerausführbaren Anweisungen durch eine Verarbeitungsschaltung ausgeführt werden, das Verfahren nach einem der Ansprüche 1 bis 13 implementiert wird.

15. Elektronische Vorrichtung, die einen Anwendungsprozessor, AP-Prozessor, und einen Sensor-Hub-Chip, SH-Chip, umfasst, wobei der AP-Prozessor und der SH-Chip dazu konfiguriert sind, das Verfahren nach einem der Ansprüche 1 bis 13 zu implementieren.

## Revendications

1. Procédé de gestion de connexion inter-dispositifs, dans lequel le procédé comprend :
l'envoi (S1103), par un processeur d'application, AP, d'un premier dispositif, d'une indication proxy à une puce de concentrateur de capteurs, SH du premier dispositif, dans lequel l'indication proxy transporte une liste de dispositifs en ligne, une stratégie de diffusion, et une stratégie de balayage, et l'indication proxy indique à la puce SH de servir de proxy au processeur AP pour réaliser la découverte de dispositifs et le maintien de connexion ;
l'envoi (S1104), par la puce SH, d'un message de diffusion selon la stratégie de diffusion, et la réalisation d'un balayage selon la stratégie de balayage ;
le fait de déterminer (S1106), par la puce SH lorsque la puce SH découvre un second dispositif par balayage, si le second dispositif est dans la liste de dispositifs en ligne ; et
si le second dispositif n'est pas dans la liste de dispositifs en ligne, le signalement (S1107-2), par la puce SH au processeur AP, que le second dispositif doit être en ligne.

2. Procédé selon la revendication 1, dans lequel le procédé comprend en outre :
la mise à jour (S1109), par le processeur AP, de la liste de dispositifs en ligne sur la base du rapport de la puce SH, dans lequel une liste de dispositifs en ligne mise à jour comprend des informations sur le second dispositif ;
l'envoi (S1110), par le processeur AP, de la liste de dispositifs en ligne mise à jour à la puce SH ; et
la réalisation, par la puce SH, de la découverte de dispositifs et du maintien de connexion sur la base de la liste de dispositifs en ligne mise à jour.

3. Procédé selon la revendication 1, dans lequel le procédé comprend en outre :
si le second dispositif est dans la liste de dispositifs en ligne, la réponse (S1107-1), par la puce SH, au second dispositif avec un message de diffusion.

4. Procédé selon la revendication 3, dans lequel l'indication de proxy transporte en outre un modèle de réponse de proxy, et la réponse (S1107-1), par la puce SH, au second dispositif avec un message de diffusion comprend :
la réponse, par la puce SH, au second dispositif avec le message de diffusion sur la base du modèle de réponse de proxy.

5. Procédé selon l'une quelconque des revendications 1 à 3, dans lequel l'indication de proxy transporte en outre un ID de diffusion et un ID de balayage, et le procédé comprend en outre :
la modification, par le processeur AP, de la stratégie de diffusion sur la base de l'ID de diffusion et/ou la modification de la stratégie de balayage sur la base de l'ID de balayage ;
l'envoi, par le processeur AP, d'une stratégie de diffusion et/ou d'une stratégie de balayage modifiée à la puce SH ; et
l'envoi, par la puce SH, d'un message de diffusion selon la stratégie de diffusion modifiée, et/ou la réalisation d'un balayage selon la stratégie de balayage modifiée.

6. Procédé selon l'une quelconque des revendications 1 à 5, dans lequel le procédé comprend en outre :
l'entrée, par le processeur AP, dans un état de veille après que le processeur AP envoie l'indication proxy à la puce SH.

7. Procédé selon l'une quelconque des revendications 1 à 5, dans lequel le procédé comprend en outre :
après que le processeur AP envoie (S1103) l'indication proxy à la puce SH, le traitement, par le processeur AP, d'un service dont la priorité est supérieure à celle d'un service de découverte de dispositifs et de maintien de connexion.

8. Procédé selon l'une quelconque des revendications 1 à 7, dans lequel le procédé comprend en outre :
la récupération, par le processeur AP, de l'autorisation proxy de la puce SH.

9. Procédé selon l'une quelconque des revendications 2 à 8, dans lequel le procédé comprend en outre :
l'établissement (S1108), par le processeur AP, d'une connexion BLE au second dispositif sur la base du rapport de la puce SH.

10. Procédé selon la revendication 9, dans lequel le procédé comprend en outre :
dans un processus dans lequel le processeur AP établit la connexion BLE au second dispositif sur la base du rapport de la puce SH, le stockage, par le processeur AP, d'une clé de résolution IRK et d'un descripteur de découverte de service qui sont du second dispositif ; et
lorsqu'un nombre de dispositif sur un réseau sur lequel le premier dispositif réside est supérieur à une valeur prédéfinie, l'établissement, par le processeur AP, d'une connexion BLE rapide au second dispositif sur la base de l'IRK et du descripteur de découverte de service qui sont du second dispositif.

11. Procédé selon la revendication 10, dans lequel l'établissement, par le processeur AP, d'une connexion BLE rapide avec le second dispositif sur la base de l'IRK et du descripteur de découverte de service qui sont du second dispositif comprend :
l'invocation, par le processeur AP, du descripteur de découverte de service, et la résolution (2102) d'une adresse aléatoire du second dispositif sur la base de l'IRK du second dispositif, pour obtenir une adresse réelle du second dispositif ;
l'établissement (2103), par le processeur AP, de la connexion au second dispositif sur la base de l'adresse réelle du second dispositif ; et
l'échange (2104), par le processeur AP, d'unités de transmission maximales respectives MTU avec le second dispositif.

12. Procédé selon la revendication 9 ou 10, dans lequel le procédé comprend en outre :
l'envoi, par la puce SH, d'une notification directionnelle au second dispositif via la connexion BLE rapide.

13. Procédé selon l'une quelconque des revendications 1 à 12, dans lequel le fait de déterminer, par la puce SH lorsque la puce SH découvre un second dispositif par balayage, si le second dispositif est dans la liste de dispositifs en ligne comprend :
le fait de déterminer, par la puce SH lors de l'obtention d'un message de diffusion en rafale provenant du second dispositif par balayage, si le second dispositif est dans la liste de dispositifs en ligne.

14. Support de stockage lisible par ordinateur, dans lequel le support de stockage lisible par ordinateur stocke des instructions exécutables par ordinateur, et lorsque les instructions exécutables par ordinateur sont exécutées par un circuit de traitement, le procédé selon l'une quelconque des revendications 1 à 13 est mis en œuvre.

15. Dispositif électronique comportant un processeur d'application, AP, et une puce de concentrateur de capteurs, SH, dans lequel le processeur AP et la puce SH sont configurés pour mettre en œuvre le procédé selon l'une quelconque des revendications 1 à 13.
